(19) Europäisches Patentamt
European Patent Office
Office européen des brevets

(11) **EP 1 725 405 B1**

(12) **EUROPEAN PATENT SPECIFICATION**

(45) Date of publication and mention
of the grant of the patent:
**15.12.2010 Bulletin 2010/50**

(51) Int Cl.:
*B41J 2/045* (2006.01)   *B41J 2/055* (2006.01)
*B41J 2/16* (2006.01)   *B81B 3/00* (2006.01)
*G02B 26/08* (2006.01)

(21) Application number: 05721042.9

(22) Date of filing: **11.03.2005**

(86) International application number:
**PCT/JP2005/004855**

(87) International publication number:
**WO 2005/090082 (29.09.2005 Gazette 2005/39)**

(54) **LIQUID DROP DISCHARGE HEAD, INK CARTRIDGE AND INKJET RECORDING DEVICE**

FLÜSSIGKEITSTROPFENAUSTRAGSKOPF, TINTENPATRONE UND
TINTENSTRAHLAUFZEICHNUNGSVORRICHTUNG

TETE DE DECHARGE DES GOUTTES DE LIQUIDE, CARTOUCHE D'ENCRE  ET  DISPOSITIF
ENREGISTREUR DE JET D' ENCRE

(84) Designated Contracting States:
**DE ES FR GB IT NL**

(30) Priority: **18.03.2004   JP 2004079294**

(43) Date of publication of application:
**29.11.2006   Bulletin 2006/48**

(73) Proprietor: **Ricoh Company, Ltd.
Tokyo 143-8555 (JP)**

(72) Inventors:
• **KURODA, Takahiko
Sanda-shi, Hyogo 6691544 (JP)**
• **ABE, Shuya
Takarazuka-shi, Hyogo 6650874 (JP)**

(74) Representative: **Leeming, John Gerard et al
J.A. Kemp & Co.
14 South Square
Gray's Inn
London WC1R 5JJ (GB)**

(56) References cited:
EP-A- 1 226 945   WO-A-02/12116
WO-A1-99/34979   WO-A1-2004/012942
JP-A- 2001 018 383   JP-A- 2004 249 668
JP-A- 2005 007 766

**Description**

The present invention relates to liquid drop discharge heads, ink cartridges and inkjet recording devices.

In an ink jet recording apparatus used as a picture recording apparatus or picture forming apparatus such as a printer, facsimile, or copier, a liquid drop jet head is used as in ink jet head configured to discharge (jet out) ink.

The ink jet head includes a nozzle, a discharging room, a common room, and pressure generating means. An ink drop is discharged by the nozzle. The nozzle is connected to the discharging room. The discharging room is called a pressurized liquid room, pressure room, ink channel, or the like. Discharging fluid (ink) supplied to the discharging room is received in the common room. The inside of the discharging room is pressurized by the pressure generating means, so that discharging energy is given to the ink in the discharging room and thereby the ink can be discharged from the nozzle. The ink drop is discharged from the nozzle due to the pressure in the discharging room generated by the pressure generating means.

Although there are several kinds of pressure generating means, an electrostatic type pressure generating means is used for the present invention. In the electrostatic type pressure generating means, a vibration plate forming a wall surface of the discharging room is deformed by an electrostatic force so that an ink drop is discharged. Recently and continuing, such an electrostatic type pressure generating means attracts a great deal of attention from the perspective of the environment because the electrostatic type pressure generating means does not use lead. In addition, a lot of technologies having little effect on the environment are suggested from the perspective of low consumption of electric power in addition to no lead in the electrostatic type pressure generating means.

In the electrostatic type pressure generating means, a couple of electrodes are provided via a space. There is an example where one of the electrodes works as the vibration plate and ink fills a side opposite to the electrode facing the vibration plate. The electrostatic force works between the electrodes by applying voltage to the electrodes so that the electrode (vibration plate) is deformed. The vibration plate is returned back to the original state by an elastic force based on turning off the voltages so that the ink is discharged based on the elastic force.

Such pressure generating means for pressurizing the discharge fluid is called an actuator. In the electrostatic type ink jet head, the measurement precision of a first space, namely a space of the vibration plate and the electrode which are main parts of the actuator, gives a large amount of influence to the capacity (size) of the pressure generating means. Especially, in a case of the ink jet heads, the larger the dispersion of the capacity of the actuators is, the more printing precision and reproducibility of image quality are reduced.

It is important to prevent the measurement dispersion of the space in order to obtain a head having high reliability. It is required that the number of processes for determining the space measurement be made as small as possible in order to prevent the measurement dispersion of the space.

Because of this, a technology where the vibration plate, the space and the electrode are formed at a single substrate by applying the sacrificial layer process as a manufacturing method is suggested. See Japanese Laid-Open Patent Application Publications No. WO99/34979 and No. 2001-18383.

In a case of the sacrificial layer process, for example, a deposition method, wherein the sacrificial layer elimination hole, after the sacrificial layer is eliminated, is closed by Ni, $SiO_2$, or the like by using a PVD method or CVD method with a vacuum device, may be used. However, in this deposition method, a deposition component may invade (seep into) the space. If the deposition component invades the space, a vibration property of the vibration plate is changed so that a bad influence is given to the reliability. In addition, since the sacrificial layer elimination hole is also used for ensuring the strength of a partition, it is not possible to make the hole small and therefore the hole is not appropriate for being made at a high density.

The sacrificial layer elimination hole may be sealed by a film formed by a deposition method using a vacuum device so that the deposition component can be prevented from invading the space. However, in this method; since a process is performed in the vacuum state, the pressure in the space may be negative when atmospheric exposure occurs. Hence, it r is not possible to obtain a desirable amount of bending deformation of the vibration plate and deformation dispersion may be generated due to the dispersion of the bending.

In addition, in a case of vacuum sealing, since there is no damper effect of gas in the space, the dispersion of the vibration deformation against the dispersion of the thickness of the vibration plate becomes large. A structure or process opening to the air is required to solve the above-mentioned problems and this may cause increase of cost or decrease of yield rate. Thus, in the related art, it is difficult to obtain the actuator having high precision and using an electrostatic force with high reliability at low cost.

EP 1 226 945 A1 discloses an electrostatically actuated device in which a space under a membrane is formed by etching a sacrificial layer through etch holes formed in an electrode area.

WO 02/12116 discloses an optical MEMS device formed on bonding wafers, a sacrificial layer is removed through holes opening directly into a space below the actuated micromirror.

WO 2004/012942 A1 discloses a liquid drop discharge head according to the preamble of claim 1.

Accordingly, it is a general object of the present invention to provide a novel and useful liquid drop discharge head, ink cartridge and inkjet recording device.

Another and more specific object of the present invention is to provide a liquid drop discharge head, ink cartridge and inkjet recording device which have an actuator having high precision and reliability, whereby a sacrificial layer elimination hole is sealed under atmospheric conditions without using a vacuum device so that a deposition film is effectively prevented from invading in a first space.

According to the present invention there is provided a liquid drop discharge head, an ink cartridge and an inkjet recording device as defined in the appended claims.

FIG. 1 is a perspective view having a partial cross-sectional view of a liquid drop discharge head of the present invention;

FIG. 2 is a plan view of a substrate of the present invention forming an actuator of the liquid drop discharge head of the present invention;

FIG. 3 is aY1-Y1 cross-sectional view of the substrate shown in FIG. 2;

FIG.4- (a) is anX1-X1 cross-sectional view of the substrate shown in FIG. 2, FIG.4- (b) is an X2-X2 cross-sectional view of the substrate shown in FIG.2, FIG. 4-(c) is an X3-X3 cross-sectional view of the substrate shown in FIG. 2;

FIG. 5 is a view showing a manufacturing process of the substrate, more specifically, FIG. 5-(a) is an X2-X2 cross-sectional view of the substrate shown in FIG. 2, and FIG. 5-(b) is a Y1-Y1 cross-sectional view of the substrate shown in FIG. 2;

FIG. 6 is a view showing a manufacturing process of the substrate, more specifically, FIG. 6-(a) is an X2-X2 cross-sectional view of the substrate shown in FIG. 2, and FIG. 6-(b) is a Y1-Y1 cross-sectional view of the substrate shown in FIG. 2;

FIG. 7 is a view showing a manufacturing process of the substrate, more specifically, FIG. 7-(a) is an X2-X2 cross-sectional view of the substrate shown in FIG. 2, and FIG. 7-(b) is a Y1-Y1 cross-sectional view of the substrate shown in FIG. 2;

FIG. 8 is a view showing a manufacturing process of the substrate, more specifically, FIG. 8-(a) is an X2-X2 cross-sectional view of the substrate shown in FIG. 2, and FIG. 8-(b) is a Y1-Y1 cross-sectional view of the substrate shown in FIG. 2;

FIG. 9 is a view showing a manufacturing process of the substrate, more specifically, FIG. 9-(a) is an X2-X2 cross-sectional view of the substrate shown in FIG. 2, and FIG. 9-(b) is a Y1-Y1 cross-sectional view of the substrate shown in FIG. 2;

FIG. 10 is a view showing a manufacturing process of the substrate, more specifically, FIG. 10-(a) is an X2-X2 cross-sectional view of the substrate shown in FIG. 2, and FIG. 10-(b) is a Y1-Y1 cross-sectional view of the substrate shown in FIG. 2;

FIG. 11-(a) is a plan view of a barrier pattern, FIG. 11-(b) is an X2-X2 cross-sectional view of FIG. 11-(a), and FIG. 11-(c) is a Y1-Y1 cross-sectional view of FIG. 11-(a) ;

FIG. 12-(a) is a plan view of a barrier pattern, FIG. 12-(b) is an X2-X2 cross-sectional view of FIG. 12-(a), and FIG. 12-(c) is a Y1-Y1 cross-sectional view of FIG. 12-(a);

FIG. 13-(a) is a plan view of a barrier pattern, FIG. 13-(b) is an X2-X2 cross-sectional view of FIG. 13- (a), and FIG. 13-(c) is a Y1-Y1 cross-sectional view of FIG. 13-(a);

FIG. 14-(a) is a plan view of a barrier, FIG. 14-(b) is an X2-X2 cross-sectional view of FIG. 14-(a), and FIG. 14-(c) is a Y1-Y1 cross-sectional view of FIG. 14-(a);

FIG. 15-(a) is a plan view of a barrier, FIG. 15-(b) is an X2-X2 cross-sectional view of FIG. 15-(a), and FIG. 15-(c) is a Y1-Y1 cross-sectional view of FIG. 15-(a);

FIG. 16-(a) is a plan view of a barrier, FIG. 16-(b) is an X2-X2 cross-sectional view of FIG. 16-(a), and FIG. 16-(c) is a Y1-Y1 cross-sectional view of FIG. 16-(a) ;

FIG. 17-(a) is a plan view of the substrate forming the actuator and FIG. 17-(b) is a Y1-Y1 cross-sectional view of FIG. 17-(a);

FIG. 18 is an X1-X1 cross-sectional view of the substrate shown in FIG. 17;

FIG. 19 is an X2-X2 cross-sectional view of the substrate shown in FIG. 17;

FIG. 20 is an X3-X3 cross-sectional view of the substrate shown in FIG, 17;

FIG. 21 is a view showing a manufacturing process of the substrate, more specifically, FIG. 21-(a) is an X2-X2 cross-sectional view of the substrate shown in FIG. 17, and FIG. 21-(b) is a Y1-Y1 cross-sectional view of the substrate shown in FIG. 17;

FIG. 22 is a view showing a manufacturing process of the substrate, more specifically, FIG. 22-(a) is an X2-X2 cross-sectional view of the substrate shown in FIG. 17, and FIG. 22-(b) is a Y1-Y1 cross-sectional view of the substrate shown in FIG. 17;

FIG. 23 is a view showing a manufacturing process of the substrate, more specifically, FIG. 23-(a) is an X2-X2 cross-sectional view of the substrate shown in FIG. 17, and FIG. 23-(b) is a Y1-Y1 cross-sectional view of the substrate shown in FIG. 17;

FIG. 24 is a view showing a manufacturing process of the substrate, more specifically, FIG. 24-(a) is an X2-X2 cross-sectional view of the substrate shown in FIG. 17, and FIG. 24-(b) is a Y1-Y1 cross-sectional view of the substrate shown in FIG. 17;

FIG. 25 is a view showing a manufacturing process of the substrate, more specifically, an X2-X2 cross-sectional view of the substrate shown in FIG. 17;

FIG. 26 is a view showing a manufacturing process of the substrate, more specifically, FIG. 26-(a) is an X2-X2 cross-sectional view of the substrate shown in FIG. 17, and FIG. 26-(b) is a Y1-Y1 cross-sectional view of the substrate shown in FIG. 17;

FIG. 27 is a view showing a manufacturing process of the substrate, more specifically, FIG. 27-(a) is an X2-X2 cross-sectional view of the substrate shown in FIG. 17, and FIG. 27-(b) is a Y1-Y1 cross-sectional view of the substrate shown in FIG. 17;

FIG. 28-(a) is a plan view of a barrier pattern, FIG. 28-(b) is a Y1-Y1 cross-sectional view of FIG. 28-(a), and FIG. 28-(c) is an X2-X2 cross-sectional view of FIG. 28-(a);

FIG. 29- (a) is a plan view of a barrier pattern, FIG. 29- (b) is a Y1-Y1 cross-sectional view of FIG. 29- (a), and FIG. 29- (c) is an X2-X2 cross- sectional view of FIG. 29- (a) ;

FIG. 30- (a) is a plan view of a barrier pattern, FIG. 30-(b) is a Y1-Y1 cross-sectional view of FIG. 30- (a), and FIG. 30- (c) is an X2-X2 cross- -sectional view of FIG. 30- (a) ;

FIG. 31 is a plan view of a substrate where plural actuators are arranged; FIG. 32- (a) is a plan view of a buffer room and FIG. 32- (b) is a cross-sectional view of a barrier part in the buffer room;

FIG. 33- (a) is a plan view of a buffer room and FIG. 33- (b) is a cross-sectional view of a barrier part in the buffer room;

FIG. 34 is a perspective view of an ink cartridge;

FIG. 35 is a perspective view of an ink jet recording device; and

FIG. 36 is a cross-sectional view of a mechanism part of the ink jet recording device.

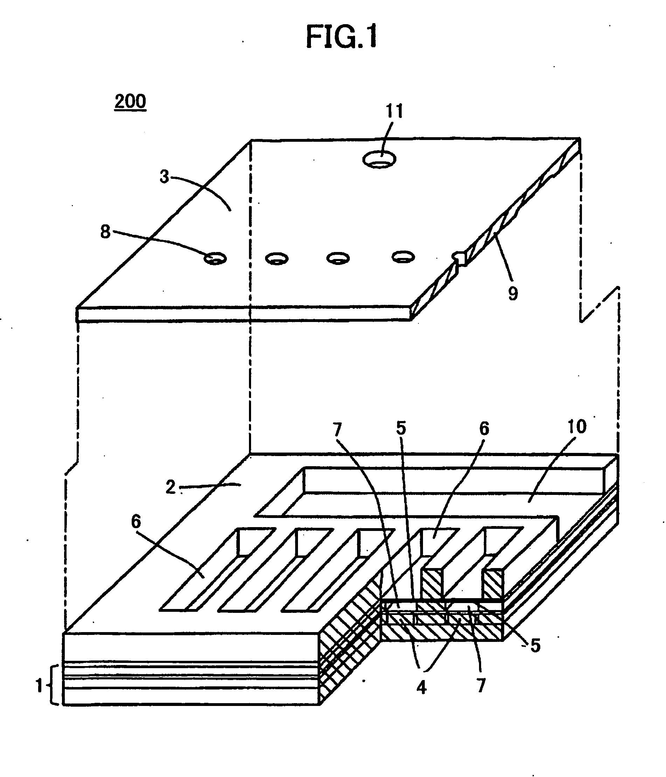

A description of the present invention and details of drawbacks of the related art are now given, with reference to FIG. 1 through FIG. 36, including embodiments of the present invention.

FIG. 1 is a perspective view having a partial cross-sectional view of a liquid drop discharge head 200 using an actuator of the present invention. An example of a side shooter type head whereby an ink drop is discharged from a nozzle provided on a surface part of a substrate is discussed in this example. The liquid drop discharge head of this example has a laminated structure where three substrates 1,2 and 3 are stacked.

In the first substrate 1, an individual electrode 4 is formed on a <110> silicon substrate by a laminating film. A vibration plate 5 is formed on the individual electrode 4 via a space 7. In other words, as shown in FIG. 1, the vibration plate 5 faces the individual electrode 4 via the space 7.

The space 7 is formed by depositing a sacrificial layer, as well as a material of the individual electrode 4 or vibration plate 5 as the laminating layer, and then removing the sacrificial layer from a sacrificial layer removing hole.

A discharging room 6 and a common liquid room 10 are provided on the second substrate 2 formed by a <110> silicon substrate connected on an upper surface of the first substrate 1. The discharging room 6 is a room having a concave-shaped and rectangular parallelepiped configuration. The discharging room 6 is provided on the vibration plate 5 and the vibration plate 5 functions as a bottom wall of the discharging room 6. The common liquid room 10 is provided at one end side of the plural discharging rooms 6 in the second substrate 2 so as to supply ink to the discharging rooms 6.

The third substrate 3 is connected to the upper surface of the second substrate 2. A nickel substrate having a thickness of 50 is provided for the third substrate 3. A nozzle hole 8 is formed in the third substrate 3 so as to be connected to the discharging room 6. A groove 9 is provided in the third substrate 3 as fluid resistance for connecting the common liquid room 10 and the discharging rooms 6.

An ink supply opening 11 is provided in the third substrate 3 so as to be connected to the common liquid room 10.

Next, action of the liquid drop discharge head 200 having the above-mentioned structure is discussed. In a state where the discharging room 6 is filled with the ink, 40 V pulse electric potentials are applied to the individual electrode 4 by an oscillation circuit.

Based on that a surface of the individual electrode 4 is electrostatically charged by the application of the voltage so as to be positive, an electrostatic action works between the vibration plate 5 and the individual electrode 4 so that the vibration plate 5 is bent downward. As a result of this, the ink enters from the common liquid room 10 to the discharging room 6 via the groove 9 forming the fluid resistance.

After that, the pulse voltage to the individual electrode 4 is changed to 0 (zero) V, so that the vibration plate 5 bent downward due to the electrostatic force returns to the original state due to the rigidity of the vibration plate 5. As a result of this, pressure in the discharging room 6 drastically increases so that the ink liquid drop is discharged onto a recording paper via the nozzle hole 8. By repeating this, the ink can be continuously discharged.

A force F working between electrodes is, as shown in the following numerical formula 1, in inverse proportion to the square of a distance d between the electrodes. Hence, in order to drive at a low voltage, it is important to make the space gap between the individual electrode 4 and the vibration plate 5 narrow.

$$[\text{Numerical Formula 1}]$$

$$F = (1/2) \times (\varepsilon\, S/d^2) \times V^2$$

$\varepsilon$ : dielectric constant
S : area of the surface of an electrode facing another electrode
D : distance between the electrodes
V: applied voltage

As described below, in the liquid drop discharge head 200 of the present invention, there is no entry (invasion) by an upper layer film via the sacrificial layer eliminating hole. Therefore, it is possible to stably make the space gap between the individual electrode 4 and the vibration plate 5 with good precision so that the action of the vibration plate 5 due to the electrostatic force can be made maximum.

A manufacturing method and structure of an actuator as pressure generating means, which is configured for pressurizing a discharge fluid and used as a part of the liquid drop discharge head 200, are discussed.

[First example]

<Main part structure of actuator>

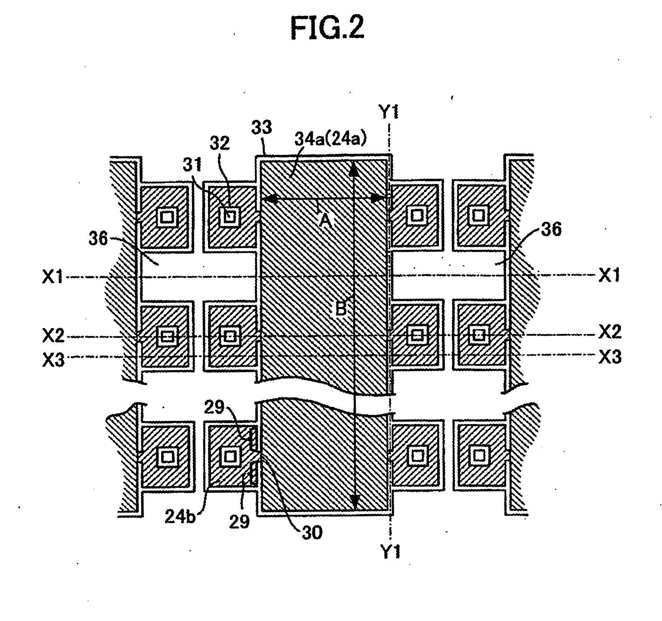

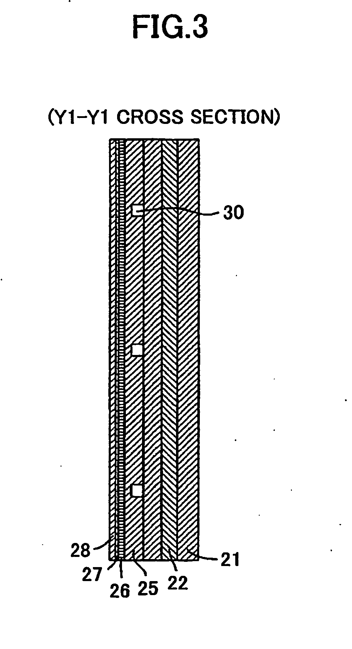

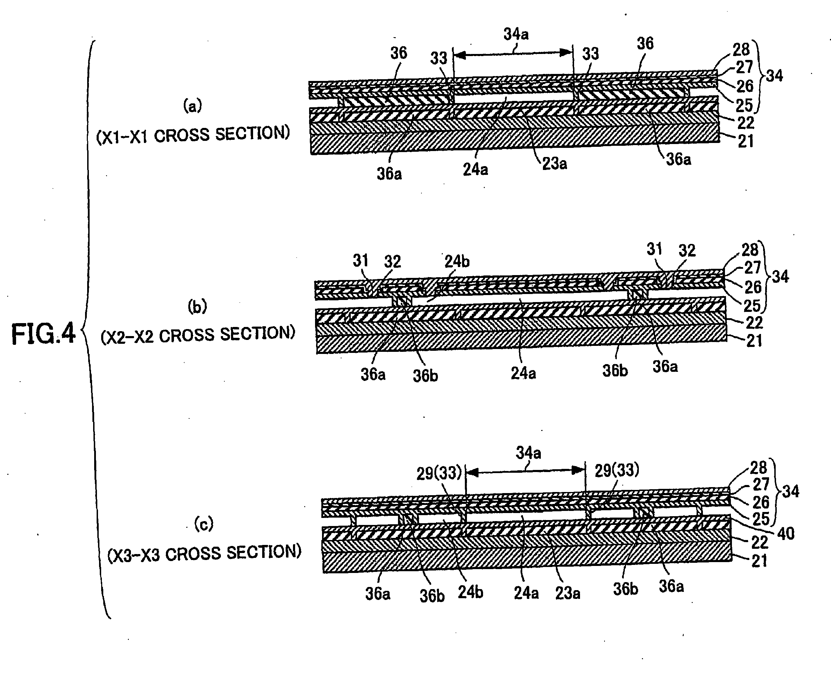

A main part structure of the actuator is discussed with reference to FIG. 2 through FIG. 11. FIG. 2 through FIG. 4 show an actuator part of the liquid drop discharge head 200 of the first example. FIG. 2 is a plan view of the actuator part. FIG. 3 is a Y1-Y1 cross-sectional view of the substrate shown in FIG. 2. FIG. 4-(a) is an X1-X1 cross-sectional view of the substrate shown in FIG. 2. FIG. 4-(b) is an X2-X2 cross-sectional view of the substrate shown in FIG. 2. FIG. 4-(c) is an X3-X3 cross-sectional view of the substate shown in FIG. 2.

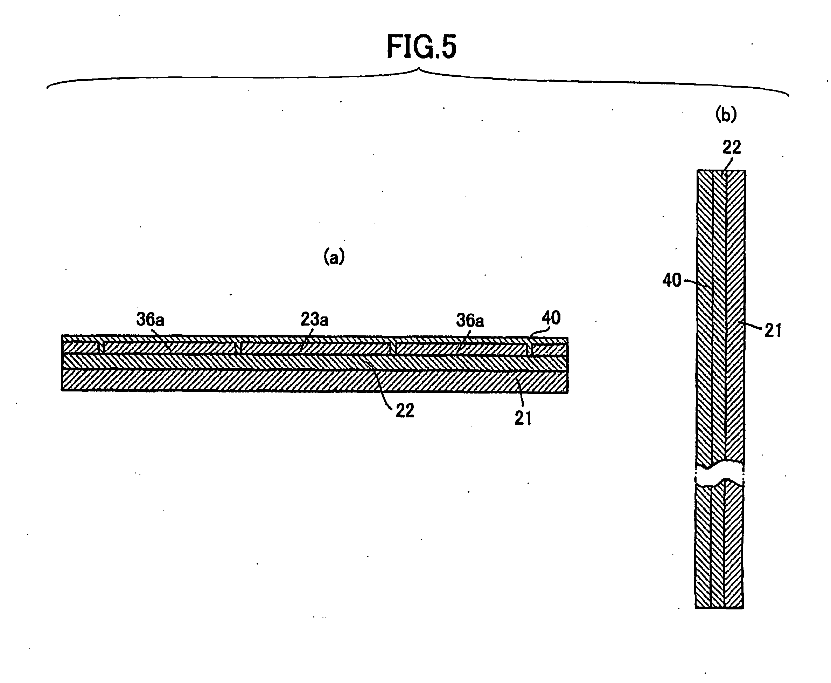

FIG. 5- (a) through FIG. 10-(a) are X2-X2 cross-sectional views of the actuator shown in FIG. 2. FIG. 5-(b) through FIG. 10-(b) are Y1-Y1 cross-sectional views of the actuator shown in FIG. 2. These drawings are described by following an order of the manufacturing steps of the actuator.

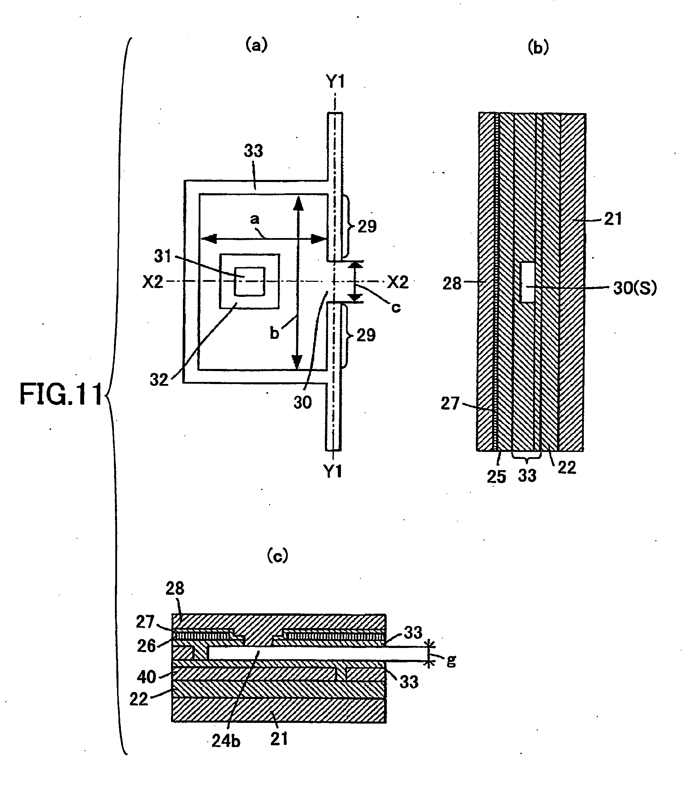

FIG. 11-(a) is a plan view of the vicinity of the sacrificial layer removing hole. FIG. 11-(b) is a Y1-Y1 cross-sectional view of the vicinity of the sacrificial layer removing hole shown in FIG. 11-(a). FIG. 11-(c) is an X2-X2 cross-sectional view of the vicinity of the sacrificial layer removing hole shown in FIG. 11-(a). For the convenience of explanation, only a single actuator is shown in FIG. 2 through FIG. 11. As shown in FIG. 4-(a) through (c), since the actuator having a multilayer structure is transparent and therefore the inside structure of the actuator can be seen through, the structure of the actuator is shown by a solid line in FIG. 2.

The space 7 shown in FIG. 1 corresponds to a first space 24a in FIG. 2. Therefore, a lower part electrode 23a corresponding to the individual electrode 4 shown in FIG. 1 is provided right under the first space 24a. A laminating film 34 is positioned above the first space 24a. The first space 24a is a space having a rectangular plate shaped configuration. The first space 24a is separated from a partition part 36 by a separation groove 33. A part corresponding to the separation groove 33 filled with a material is shown in FIG. 4-(a) and FIG. 4-(c).

A vibration plate is situated at a part where an outline of the first space 24a is projected on a laminating film positioned above the first space 24a in FIG. 4-(a) and FIG. 4-(c). This vibration plate is an area of a part of the laminating film 26 and therefore is called a vibration plate area 34a. Furthermore, since the first space 24a is an area corresponding to the vibration plate area 34a, the first space 24a is called a vibration plate corresponding area. Therefore, the vibration plate area 34a and the vibration plate corresponding area (the first space 24a) face each other in upper and lower directions and overlap as seen from an upper part.

Although the laminating film 34 forming the vibration plate may be formed as a single layer or plural layers, the laminating layer 34 in this example has a multilayer structure where an insulation film 25, an upper part electrode 26, a film bending prevention film 27, and a resin film 28 are stacked from the lower part.

The separation groove 33 is filled with a material (an insulation film 44) by the following step. If the width of the separation groove 33 is large, when the separation groove 33 is filled with the material, a part of the lower layer corresponding to the groove width has a step having a concave shaped configuration. This step gives bad influence to layers stacked above the separation layer 33 in the following step so that the thickness of the vibration plate area is uneven. Because of this, the groove width of the separation groove 33 is made as small as possible in order to prevent the generation of the step. In the examples shown in FIG. 2 and FIG. 3, the groove width of the separation groove 33 is made small so that the generation of the step is prevented.

In FIG. 2, a length A of a short side of the vibration plate area 34a is 120 $\mu$m and a length B of a long side of the vibration plate area 34a is 800 $\mu$m. A voltage can be applied so that the vibration plate area 34a can be displaced by an electrostatic force. The lower part electrode 23a is patterned on a Si substrate 21 via the insulation film 22. An insulation film 40 is formed on the lower part electrode 23a to prevent generation of short-circuit with the upper part electrode 26.

In FIG. 2 and FIG. 4- (b), the sacrificial layer removing hole 31 is formed at the outside of the vibration plate area 34a so as to penetrate through the insulation film 25, the upper part electrode 26, and the film bending prevention layer 27 (See claim 2). If the sacrificial layer removing hole 31 or a barrier 29 is arranged in the vibration plate area 34a, the efficiency of the displacement of the vibration plate becomes bad and complex displacement happens and therefore it is difficult to design for obtaining a desirable vibration property. On the other hand, by arranging the sacrificial layer removing hole 31 or the barrier 29 outside of the vibration plate area 34a, it is possible to obtain the desirable vibration property and the liquid drop discharge head 200 and an actuator having high reliability.

Referring to FIG. 2, FIG. 4-(b), and FIG. 4-(c), the vibration plate area 34a forms a vibration plate displaced by an electrostatic force acting between the lower electrode 23a and the upper part electrode 26 in the first space 24a. The lower part electrode 23a faces the vibration plate area 34a via the first space 24a. The first space 24a is formed by a sacrificial layer process using the sacrificial layer removing hole 31. The barrier 29 as a fluid resistance is formed between the first space 24a and a second space 24b in the vicinity of the sacrificial layer removing hole 31 (See claim 1 and claim 10).

The sacrificial layer removing hole 31 is sealed by the resin film 28. In a case where the resin film 28 is formed as a wet film of the liquid drop by a spin coating method, the barrier 29 as the fluid resistance and a connecting part 30 are provided between the space 24b in the vicinity of the sacrificial layer removing hole 31 and the space 24a situated under the vibration plate area 34a, so that the resin material 28 is prevented from seeping from the sacrificial layer removing hole 31 into the first space 24a situated under the vibration plate area 34a. This is because if the resin material seeps into the first space 24a situated under the vibration plate area 34a, the vibration plate area 34a is adhered to the lower part electrode 23a and therefore cannot work as an actuator. By providing the barrier 29 in the vicinity of the sacrificial layer removing hole 31, as compared with a structure not having the barrier 29, the resin material 28 can be prevented from seeping into the first space 24a situated under the vibration plate area 34a so that it is possible to obtain a high yield rate.

Thus, by forming the barrier 29, the sacrificial layer removing hole 31 can be sealed with a method not using a vacuum device. When the sacrificial layer removing hole 31 is sealed with the resin film 28, it is possible to prevent the resin film 28 from entering into the space 24a by the fluid resistance of the barrier 29. Since the sacrificial layer removing hole 31 is sealed by the resin film 28 that is a part of the vibration plate forming film, it is not necessary to provide a process for only sealing and therefore the number of processes can be reduced. Because of this, it is possible to obtain the liquid drop discharge head 200 and the actuator having high reliability at low cost.

In this example, (i) the first space 24a for displacing the vibration plate area 34a, (ii) the separation groove 33 including the connection opening connecting between the sacrificial layer removing hole 31 and the first space 24a, and (iii) the second space 24b that is an area surrounded by the barrier 29 have, for example, thicknesses of 0. 40 $\mu$m. A sacrificial layer process is used for forming the first and second spaces 24a and 24b. The sacrificial layer removing hole 31 is formed in the vibration plate forming film 34 via the upper electrode opening part 32.

The sacrificial layer removing holes 31 are arranged at even intervals equal to or less than the length of the short side A of the vibration plate area 34a along the long side B of the vibration plate area 34a. The sacrificial layer removing holes 31 are formed at same positions of the sides facing each other. Thus, it is possible to efficiently etch the sacrificial layer so as to form the first and second spaces 24a and 24b, by arranging plural sacrificial layer removing holes 31.

In a case of the liquid drop discharge head 200, generally, an actuator configured to discharge the liquid drop has a long and narrow rectangular shaped configuration and a neighboring actuator is arranged at a long side. Since the sacrificial layer etching is isotropic, removing efficiency of the sacrificial layer is high if the sacrificial layer removing hole 31 is arranged in the center of the vibration plate area 34a. However, if the sacrificial layer removing hole 31 is arranged in the displacement area of the vibration plate, a vibration property of the actuator may be given bad influence. Hence, it is necessary to arrange the sacrificial layer removing hole 31 outside of the vibration plate area 34a.

As shown in FIG. 2, in this example, a connection part 30 configured to connect the first space 24a and the second space 24b is provided in the barrier 29 (See claim 3). Because of this structure, when the fluid resistance in the vicinity of the sacrificial layer removing hole 31 is formed, it is possible to sufficiently secure freedom of design from the perspective of processing and structure. Hence, it is possible to design and manufacture the actuator or the liquid drop discharge head 200 without having a limitation on design of the fluid resistance in the vicinity of the sacrificial layer removing hole 31 and the connection part 30. Therefore, it is possible to improve yield rate in the manufacturing process and qualities of the liquid drop discharge head 200 and the actuator.

The liquid drop discharge head 200 shown in FIG. 1 includes a discharge room 6, a common liquid room 10 and plural actuators. The discharge room 6 is connected to a nozzle hole 8 configured to discharge the liquid drop. The ink supplied to the discharging room 6 is received in the common room 10. The actuator has the vibration plate as pressure generating means, so that discharging energy is given to the ink in the discharging room 6 and thereby the ink can be discharged from the nozzle 8. In the actuator, since the first space is manufactured by a process using the sacrificial method process, it is possible to manufacture the actuator having a high yield rate at a low cost and provide the liquid drop discharge head 200 having high quality and low dispersion (See claim 5).

(Manufacturing Process of Actuator)

Next, the manufacturing processes of the actuator are discussed with reference to FIG. 5 through FIG. 10. In FIG. 5 through FIG. 10, (a) is an X2-X2 cross-sectional view of FIG. 2 and (b) is a Y1-Y1 cross-sectional view of FIG. 2.

1. First step (See FIG. 5-(a) and FIG. 5-(b))

The insulation film (thermal oxidation film) 22 having a thickness'of 1.6 $\mu$m is formed on the Si substrate 21 having a thickness of 400 $\mu$m. Then, P doped silicon having a thickness of 0.4 $\mu$m is formed as the lower part electrode. Then, the lower electrode 23a and a part 36a of the barrier are separately formed by a litho-etching method. After that, an insulation film (CVD oxidation film) 40 of lower electrode 23a and the part 36a of the barrier are stacked so as to have a thickness of 0.2 $\mu$m. The insulation film 40 works as a mask material protecting the lower part electrode 23a in the sacrificial layer process, and as a protection film preventing an electrical short circuit of the lower part electrode 23a and the upper part electrode 26.

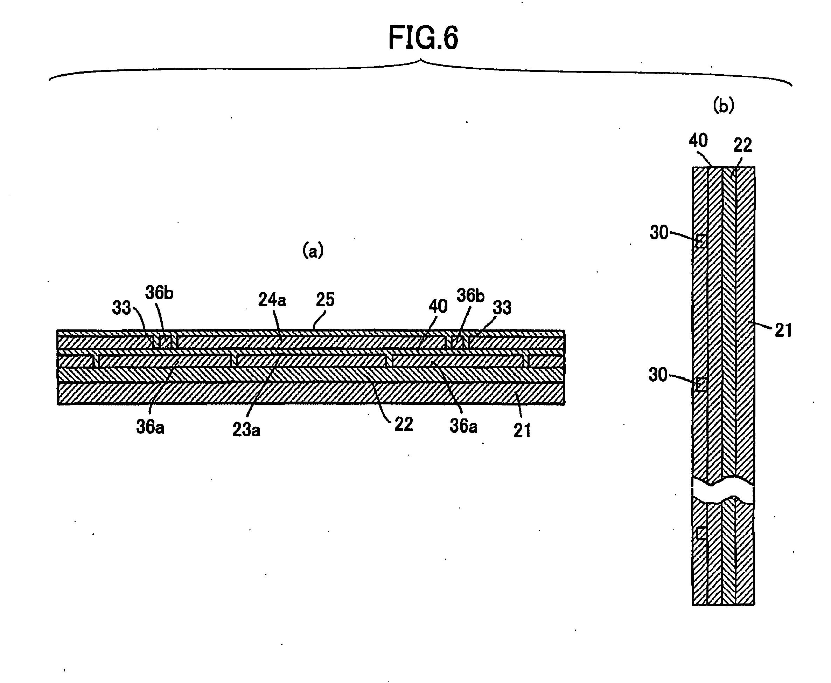

2. Second step (See FIG. 6-(a) and FIG. 6-(b))

The sacrificial layer (non-doped polysilicon) having a thickness of 0.4 $\mu$m is deposited by CVD method so as to form a space gap. Then, the separation groove 33 by which an area of the first and second space 24a and 24b and a part 36b of the barrier are separated and the barrier 29 are formed by the litho-etching method. After that, an insulation film (CVD oxidation film) 25 is stacked so as to have a thickness of 0.15 $\mu$m. The insulation film 25 works as a mask material protecting the lower part electrode 23a in the sacrificial layer process, and as a protection film preventing an electrical short circuit of the lower part electrode 23a and the upper part electrode 26.

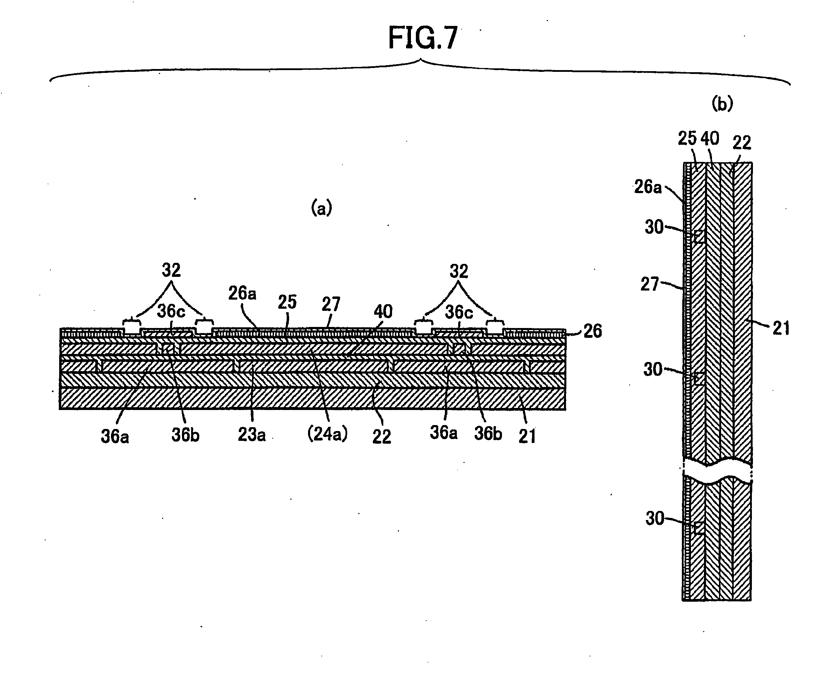

3. Third step (See FIG. 7-(a) and FIG. 7-(b))

P doped silicon having a thickness of 0.2 $\mu$ m is deposited and then the upper electrode 26a and a part 36c of the barrier are separately formed by the litho-etching method. At the same time, a protection hole (upper part electrode opening part) 32 is opened larger than the sacrificial layer removing hole 31, in order to prevent the upper electrode 26a having the same material as the sacrificial layer 24a from being etched at the time of removal of the sacrificial layer. Then, a nitride layer 27 is deposited as a vibration plate bending prevention layer by LP-CVD method so as to have a thickness of 0.2 $\mu$m.

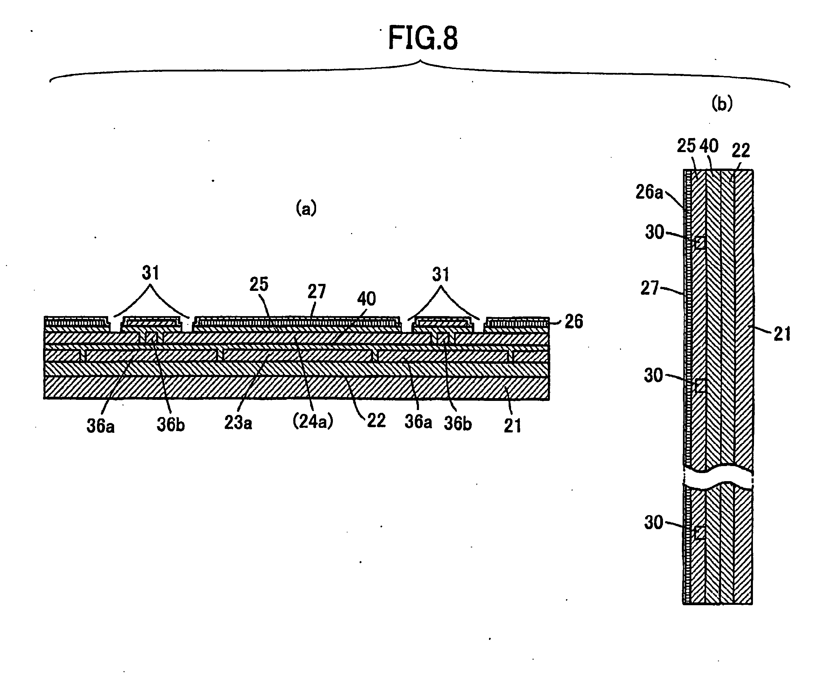

4. Fourth step (See FIG. 8-(a) and FIG. 8-(b))

The sacrificial layer removing hole 31 is formed by the litho-etching method and then the resist is removed.

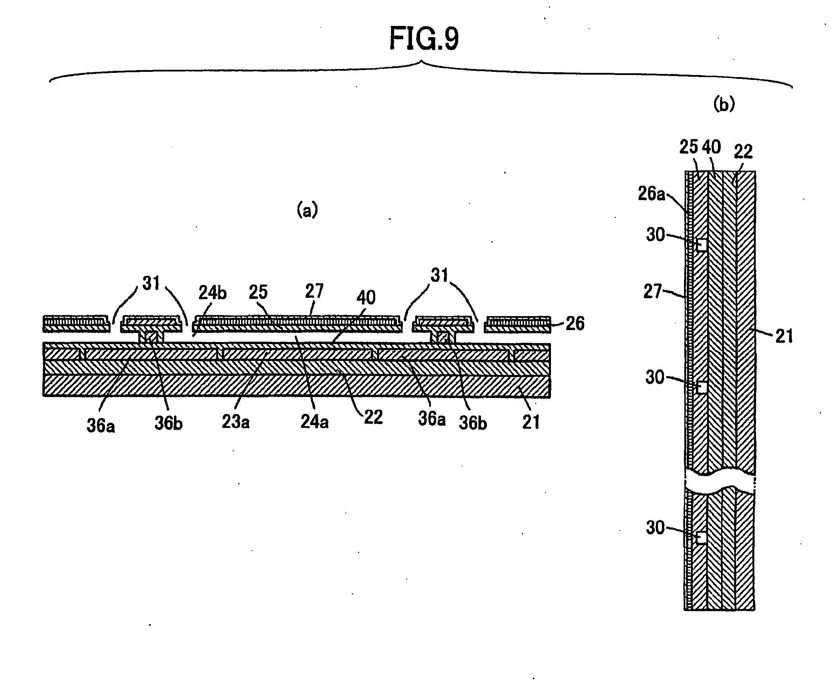

5. Fifth step (See FIG. 9-(a) and FIG. 9-(b))

The sacrificial layer is completely removed by a method having a high selectivity of etching rate of the sacrificial layer of the first and second spaces 24a and 24b and the insulation films 40 and 25, such as a wet etching method using alkali solution, so that the first and second spaces 24a and 24b are formed. In a case where TMAH or KOH is used as the alkali solution, it is possible to implement sacrificial layer etching having high selectivity. In addition, it is possible to implement the sacrificial layer etching by $SF_6$ plasma process or dry etching using $XeF_2$ gas.

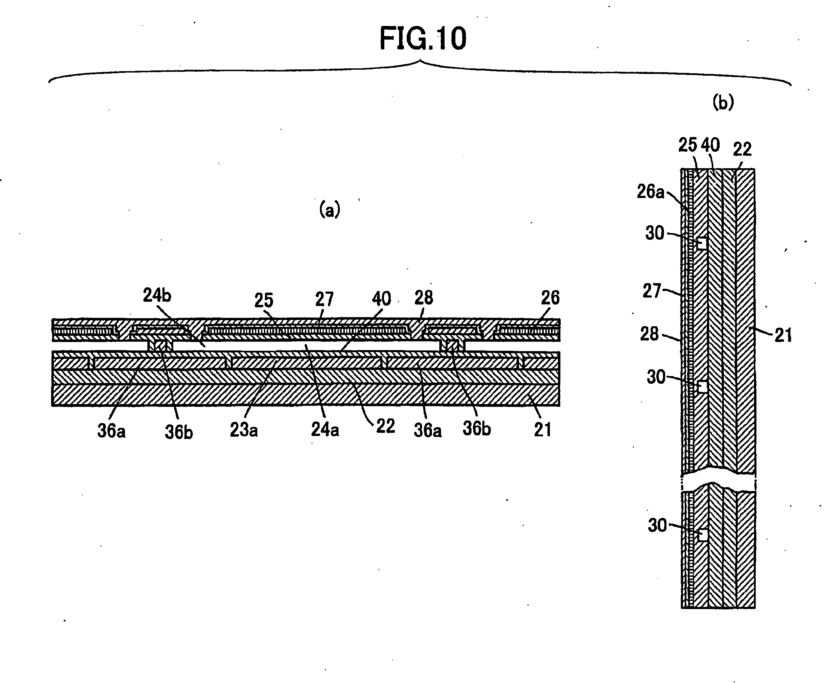

6. Sixth step (See FIG. 10-(a) and FIG. 10-(b))

The resin film 28 having a thickness of 1.8 $\mu$m is formed as a wet film of the liquid drop by a spin coating method, considering film reduction at the time of pad forming. At this time, the sacrificial layer removing hole 31 is completely sealed by the resin film 28. After that, only an electrode wiring taking pad part (not shown) is opened by the litho-etching method. Any material can be used as the resin film, as long as it has corrosion endurance against the liquid drops such as PBO (Poly-p-phenylene-benzo-bis-oxazole) film or polyimide film, can be formed by a spin coating method, and can completely seal the sacrificial layer removing hole 31.

Thus, the actuator part corresponding to the substrate 1 shown in FIG. 1 is completed. By combining this with the substrates 2 and 3 shown in FIG. 1, the liquid drop discharge head 200 is completed.

The resin film 28 seals the sacrificial layer removing hole 31 in air. Therefore, a situation where the space is vacuum sealed with a film deposited by a PVD or CVD method using a vacuum device so that the inside of the gap has a negative pressure due to atmospheric exposure, the vibration plate is bent, and desirable displacement cannot be obtained, can be prevented.

For example, in a case where, in the actuator having the first and second spaces 24a and 24b formed by removing the sacrificial layer by the wet etching method using TMAH, the sacrificial layer removing hole 31 has a cross-sectional area of 4.5 $\mu$m$^2$(3$\times$1.5 $\mu$m) and a resin film material having a coefficient of viscosity of 110cp and a film thickness of 1.8 $\mu$m is formed in the first and second spaces 24a and 24b having heights g of 0.4 $\mu$m by a spin coating method, the relationship between V/S ratio and seeping of the resin film material into the sacrificial layer removing hole 31 is shown in the following table 1. Here, "a" and "b" in the table 1 represent measurements of the separation groove 33 (hereinafter "partition part 33" because the material fills in after the actuator is completed so that the separation groove 33 forms a partition part) in the vicinity of the sacrificial layer removing hole 31 shown in FIG. 11; "c" in the table 1 represents the width of the connection part 30 of the barrier 29; "g" in the table 1 represents heights of the first and second spaces 24a and 24b; "V" in the table 1 represents a volume (V=a$\times$b$\times$g) of the second spaces 24b surrounded by the barrier 29 in the vicinity of the sacrificial layer removing hole 31 and the partition part 33; and "S" in the table 1 represents an area (S=c$\times$g) of a cross section of the connection part 30 of the barrier 33.

[Table 1]

| Structure | g | a | b | c | V | S | V/S | Seeping of Resin Film |
|---|---|---|---|---|---|---|---|---|
| | $\mu$m | $\mu$m | $\mu$m | $\mu$m | $\mu$m$^3$ | $\mu$m$^2$ | $\mu$m | |
| 1 | 0.4 | 8.0 | 7.0 | 4.0 | 22.4 | 1.6 | 14.0 | $\times$ |
| 2 | 0.4 | 10.0 | 7.0 | 4.0 | 28.0 | 1.6 | 17.5 | $\triangle$ |
| 3 | 0.4 | 10.5 | 7.0 | 4.0 | 29.4 | 1.6 | 18.4 | $\bigcirc$ |
| 4 | 0.4 | 11.0 | 7.0 | 4.0 | 30.8 | 1.6 | 19.3 | $\bigcirc$ |
| 5 | 0.4 | 12.0 | 7.0 | 4.0 | 33.6 | 1.6 | 21.0 | $\bigcirc$ |
| 6 | 0.4 | 13.0 | 7.0 | 4.0 | 36.4 | 1.6 | 22.8 | $\bigcirc$ |
| $\times$: seeping at all bits<br>$\triangle$: seeping at a partial bit<br>$\bigcirc$: no seeping at all bits | | | | | | | | |

Thus, it is found that a condition whereby the resin film 28 does not seep into the sacrificial layer removing hole 31 in the structures shown in table 1 is that the value of V/S is equal to or larger than 18.4. Therefore, in the case where the sacrificial layer removing hole 31 has a cross-sectional area of 4.5 $\mu$m$^2$ (3$\times$1.5 $\mu$m) and a resin film material having a coefficient of viscosity of 110cp and a film thickness of 1.8 $\mu$m is formed in the first and second spaces 24a and 24b having heights g of 0.4 $\mu$m by the spin coating method, it is possible to prevent the resin film material from seeping into the sacrificial layer removing hole 31 and prevent the yield rate from decreasing in this step, by setting measurements satisfying the following numerical formula 2.

$$[\text{Numerical formula 2}]$$

$$V/S > 18.4$$

It is also possible to prevent the resin film 28 from seeping into the first space 24a by making the cross section of the sacrificial layer removing hole 31 as small as possible in a range where the sacrificial layer can be removed or making the coefficient of viscosity of the resin film material high. In a case where the sacrificial layer etching method is a method other than the wet etching method of TMAH, since the condition shown in the numerical formula 2 may not be always satisfied, it is necessary to examine a proper value if necessary.

In this example, the barrier 29 is provided and a single connection opening 30 is provided so that the resin film 28 is prevented from seeping into the first and second spaces 24a and 24b. A configuration of the barrier 29 whereby the sacrificial layer can be removed and the fluid resistance is made large (at least "V" and "S" satisfy the numerical formula 2, for example) varies.

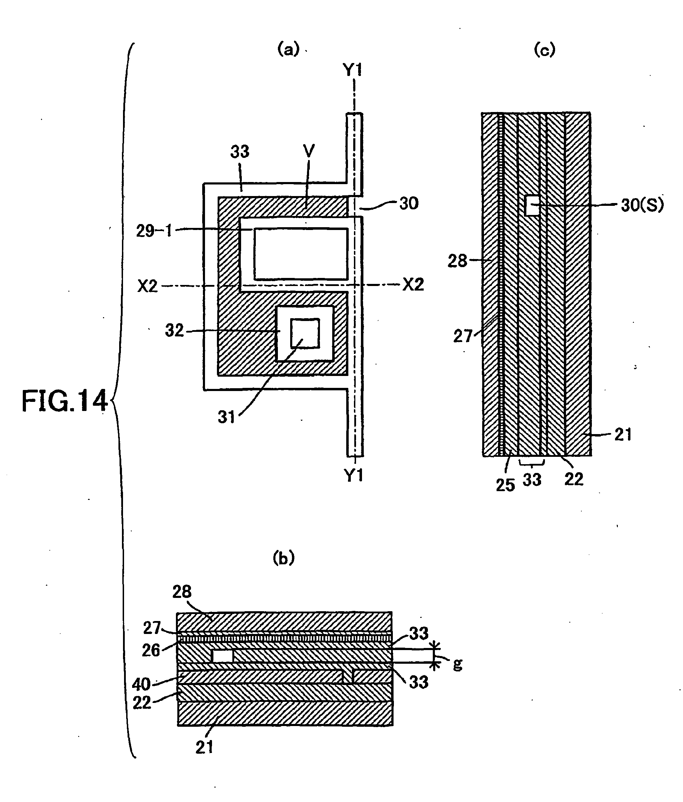

In a case where, as shown in FIG. 14 through FIG. 16, a barrier having a configuration where a fluid path enters into the connection part 30 is provided, the fluid resistance between the connection part 30 and the sacrificial layer removing hole 31 is high and therefore it is possible to further prevent the seeping of the resin film into the sacrificial layer removing hole 31 as compared with the examples shown in FIG. 11 through FIG. 13.

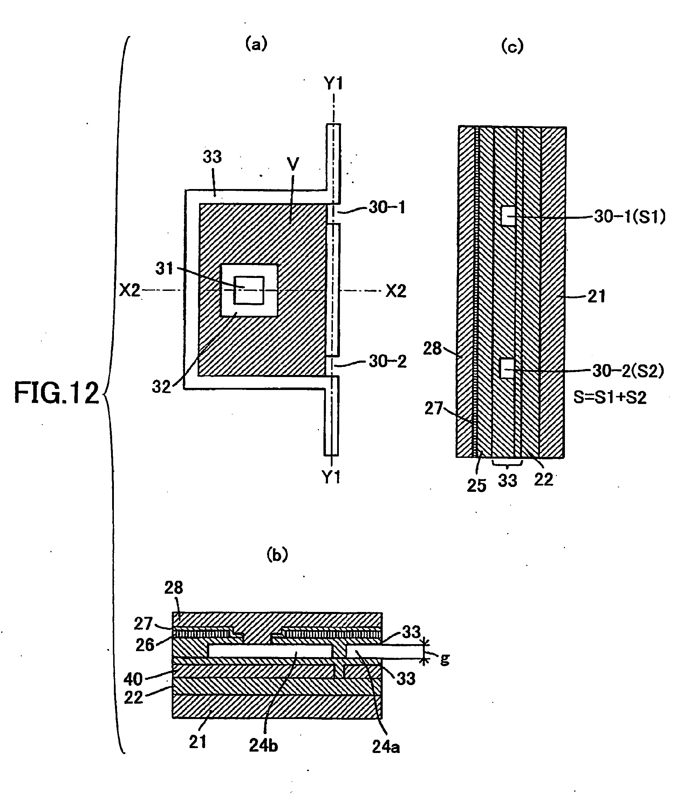

In an example shown in FIG. 12, a connection part 30-1 (cross section S1) and a connection part 30-2 (cross section S2) are provided. In this case, the cross section S mentioned in the table 1 and the numerical formula 2 is calculated as S=S1+S2.

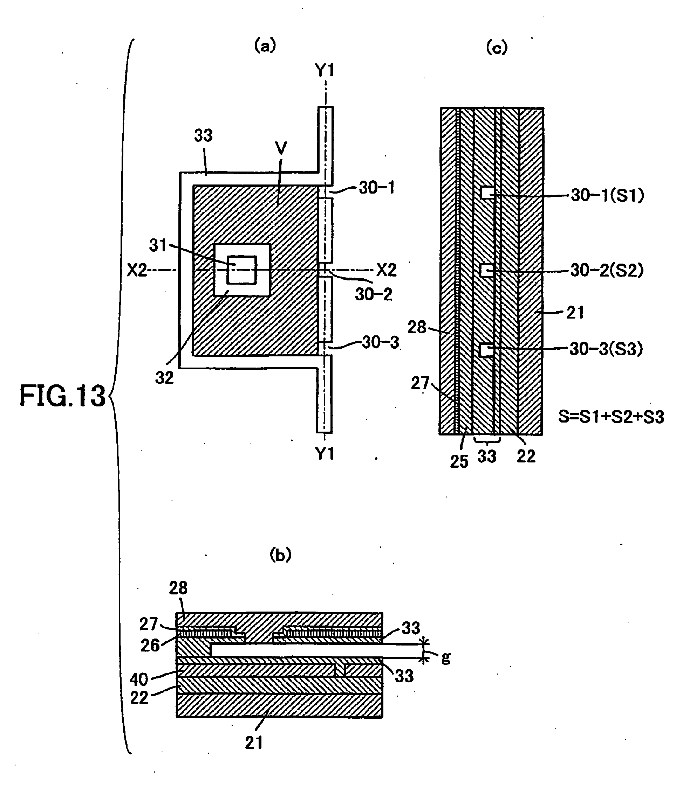

In an example shown in FIG. 13, a connection part 30-1 (cross section S1), a connection part 30-2 (cross section S2), and a connection part 30-3 (cross section S3) are provided. In this case, the cross section S mentioned in the table 1 and the numerical formula 2 is calculated as S=S1+S2+S3.

In an example shown in FIG. 14, a single connection part 30 is provided and a barrier 29-1 having a rectangular configuration is provided in the fluid path from the sacrificial layer removing hole 31 to the connection part 30. The fluid surrounds the barrier 29-1 and arrives at the connection part 30.

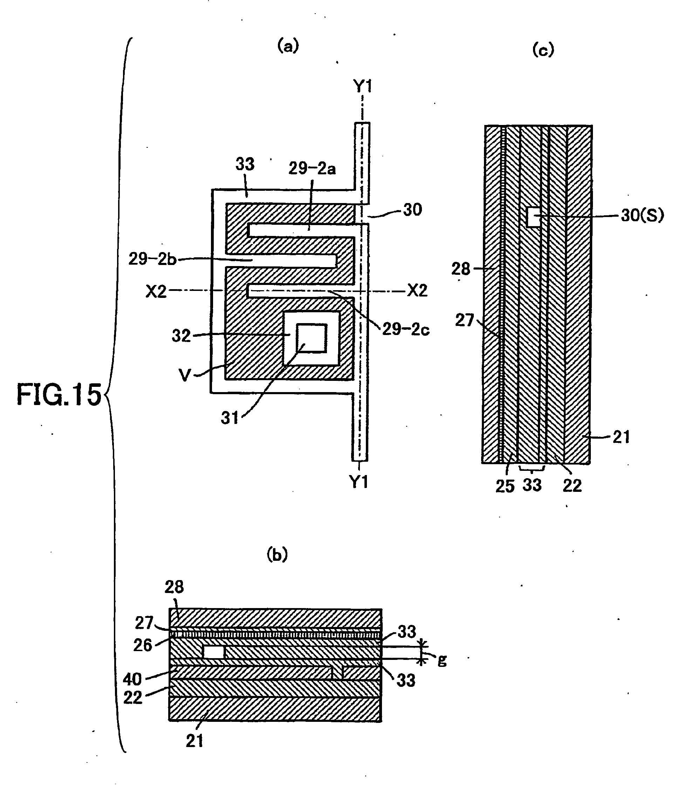

In an example shown in FIG. 15, a single connection part 30 is provided and plural barriers 29-2a, 29-2b and 29-2c having plate configurations are provided in a maze shape from the sacrificial layer removing hole 31 to the connection part 30, so that the fluid resistance is increased.

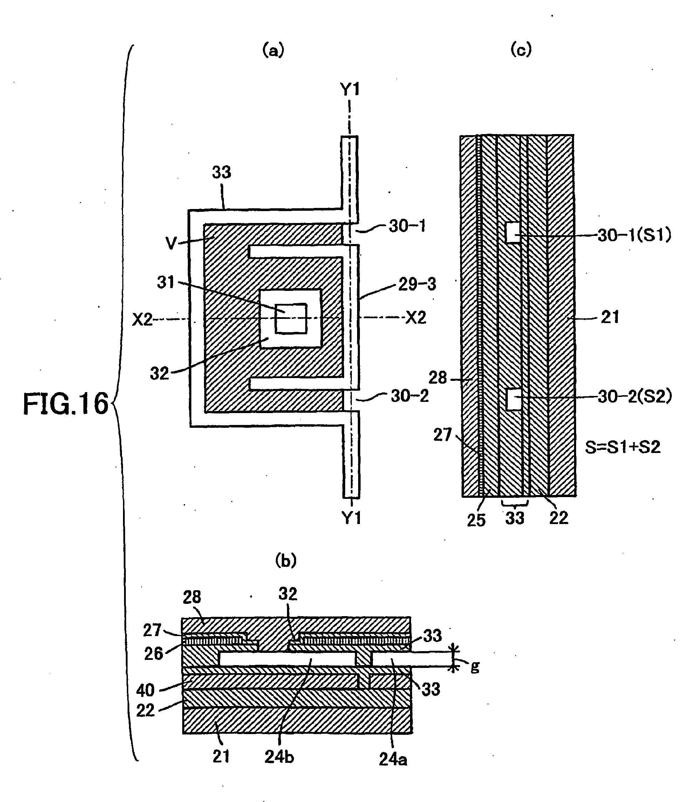

In an example shown in FIG. 16, a barrier 29-3 is provided from the sacrificial layer removing hole 31 to the connection part 30 in a shape like a rectangle not having one side. Because of this, the fluid path makes a detour so that the fluid resistance is increased and two connection parts 30-1 and 30-2 are formed.

In the examples shown in FIG. 12, FIG. 13, and FIG. 16, two or more connection parts configured to connect the first and second spaces 24a and 24b are provided in the barrier (See claim 4). Thus, by providing plural connection parts, it is possible to easily and efficiently remove the sacrificial layer of the vibration plate area. Because of this, it is possible to design easily and freely such as making parts and cross sections of the connection part proper.

[Second example]

(Structure of Actuator)

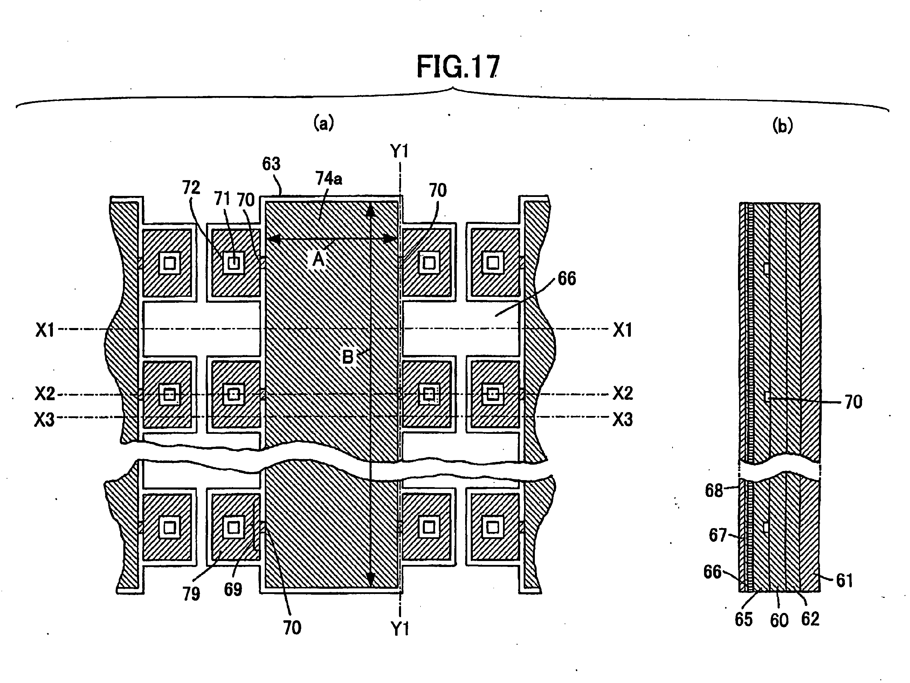

The second example is discussed with reference to FIG. 17 through FIG. 27.

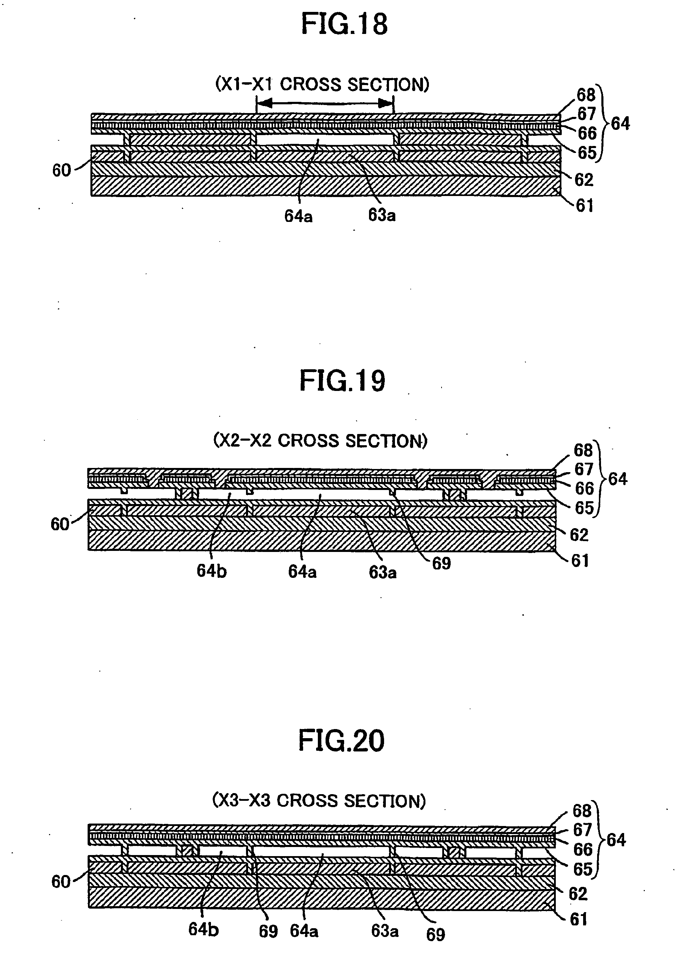

FIG. 17-(a) is a plan view of the actuator of the liquid drop discharge head 200 and FIG. 17-(b) is a Y1-Y1 cross-sectional view of FIG. 17-(a). FIG. 18 is an X1-X1 cross-sectional view of the substrate shown in FIG. 17. FIG. 19 is an X2-X2 cross-sectional view of the substrate shown in FIG. 17.

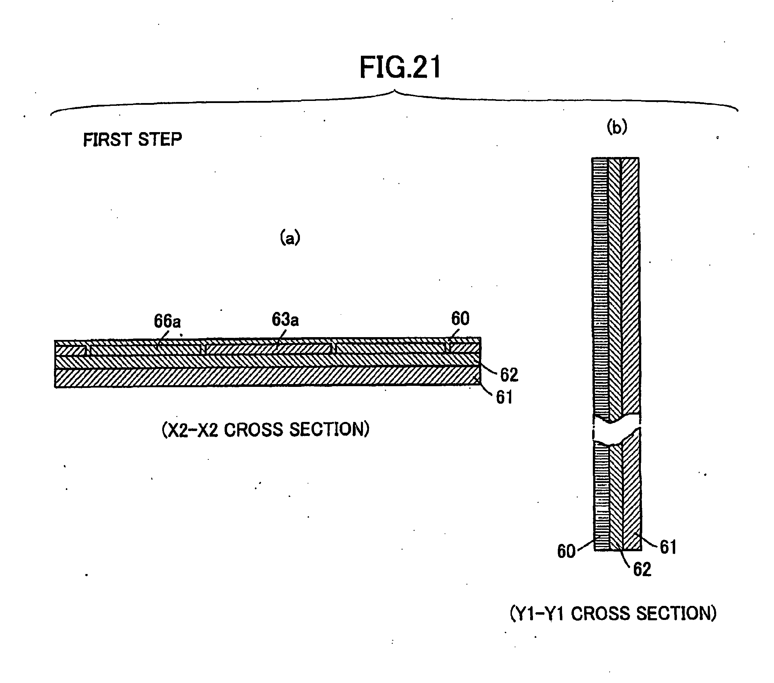

FIG. 20 is an X3-X3 cross-sectional view of the substrate shown in FIG. 17. FIG. 21 through FIG. 27 are views showing a manufacturing process of the substrate. For the convenience of explanation, only a single actuator is shown in FIG. 21 through FIG. 27.

As shown in FIG. 17 through FIG. 20, the vibration plate area 74a is separated from the partition part 66 by the separation groove 63 filled with the material. The vibration plate area 74a has a film structure where the insulation film 65, the upper electrode 66, the film bending prevention film 67 and the resin film 68 are stacked from the lower layer so as to form a laminating film 64. The width of the separation groove 63, as well as the separation groove 33, is made narrow so that a concave (step) is not formed on a surface at a part corresponding to the separation groove 63.

A length A of a short side of the vibration plate area 74a is 120 μm and a length B of a long side of the vibration plate area 74a is 800 μm. A voltage can be applied so that the vibration plate area 74a can be displaced by an electrostatic force. The lower part electrode 63a is patterned on a Si substrate 61 via the insulation film 62.

An insulation film 40 is formed on the lower part electrode 63a to prevent generation of short-circuit against the upper part electrode 66. The separation groove 33 including the connection part 70 connecting between the first space 64a for displacing the vibration plate area 74a and the second space 64b in the vicinity of the sacrificial layer removing hole 71, and the second space 64b that is an area 79 surrounded by the barrier 69 have, for example, thicknesses of 0.40 μm.

The barrier 69 has the same function as the barrier 29 in the first example, that is, a wall of the fluid resistance provided between the first space 64a and the second space 64b in the vicinity of the sacrificial layer removing hole 71 (See claims 1 and 10). In addition, the connection part 70 connecting the first and second spaces 64a and 64b, as well as the connection part 30 in the first example, is provided in the connection part 70 (See claim 3).

A sacrificial layer process is used for forming the first and second spaces 64a and 64b. The sacrificial layer removing holes 71 are formed in the vibration plate forming film 64 via the upper electrode opening part 72. The sacrificial layer removing holes 71 are arranged at even intervals equal to or less than lengths of the short side A of the vibration plate area 74a along the long side B of the vibration plate area 74a. The sacrificial layer removing holes 71 are formed at same positions of the sides facing each other. Thus, it is possible to efficiently etch the sacrificial layer so as to form the first and second spaces 64a and 64b, by arranging plural sacrificial layer removing holes 71.

In a case of the liquid drop discharge head 200, generally, an actuator configured to discharge the liquid drop has a long and narrow rectangular shaped configuration and a neighboring actuator is arranged at a long side. Since the sacrificial layer etching is isotropic, removing efficiency of the sacrificial layer is high if the sacrificial layer removing hole 71 is arranged in the center of the vibration plate area 74a. However, if the sacrificial layer removing hole 71 is arranged in the displacement area of the vibration plate, a vibration property of the actuator may be given bad influence. Hence, it is necessary to arrange the sacrificial layer removing hole 71 outside of the vibration plate area 74a. Thus, as well as the barrier 29 and the sacrificial layer removing hole 31, the barrier 69 and the sacrificial layer removing hole 71 are arranged outside of the vibration plate area 74a (See claim 2).

The sacrificial layer removing hole 61 is sealed by the resin film 68. In a case where the resin film 68 is formed as a wet film of the liquid drop by a spin coating method, the barrier 69 as the fluid resistance and a connecting part 70 are provided between the space 64b in the vicinity of the sacrificial.layer removing hole 71 and the space 64a situated under the vibration plate area 74a, so that the resin material 68 is prevented from seeping from the sacrificial layer removing hole 71 into the first space 64a situated under the vibration plate area 74a.

This is because if the resin material seeps intro the first space 64a situated under the vibration plate area 74a, the vibration plate area 74a is adhered to the lower part electrode 63a and therefore cannot work as an actuator. By providing the barrier 69 in the vicinity of the sacrificial layer removing hole 71, as compared with a structure not having the barrier 69, the resin material 68 can be prevented from seeping into the first space 64a situated under the vibration plate area 74a so that it is possible to obtain a high yield rate.

It is possible to prevent the resin film 68 from seeping into the first space 64a by making the cross section of the sacrificial layer removing hole 31 as small as possible in a range where the sacrificial layer can be removed or making the coefficient of viscosity of the resin film material high.

(Manufacturing Process of Actuator)

Next, the manufacturing processes of the actuator are discussed with reference to FIG. 21 through FIG. 27. In FIG. 21 through FIG. 27, (a) is an X2-X2 cross-sectional view of FIG. 17 and (b) is a Y1-Y1 cross-sectional view of FIG. 17.

1. First step (See FIG. 21-(a) and FIG. 21-(b))

The insulation film (thermal oxidation film) 62 having a thickness of 1.6 $\mu$m is formed on the Si substrate 61 having a thickness of 400 $\mu$m. Then, P doped silicon having a thickness of 0.4 $\mu$m is formed as the lower part electrode. Then, the lower electrode 63a and a part 66a of the barrier are separately formed by a litho-etching method. After that, an insulation film (CVD oxidation film) 60 of lower electrode 63a and the part of the barrier are stacked so as to have a thickness of 0.2 $\mu$m. The insulation film 60 works as a mask material protecting the lower part electrode 63a in the sacrificial layer process, and as a protection film preventing an electrical short circuit of the lower part electrode 63a and the upper part electrode 66.

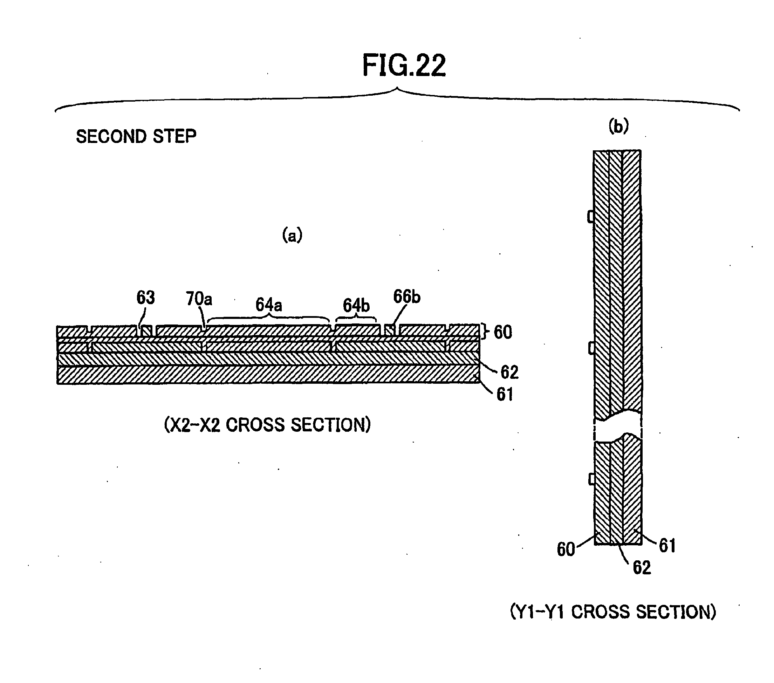

2. Second step (See FIG. 22-(a) and FIG. 22-(b))

The sacrificial layer (non-doped polysilicon) having a thickness of 0.4 "m is deposited by CVD method so as to form a space gap. Then, a part 70 functioning as the connection part 79 is etched by the litho-etching method so as to have a desirable height, and the resist is removed. That is, all of a height direction of the connection part 70 is not opened but the height direction is formed like a dam. On this point, the connection part 70 is different from the connection part 30 in the first example.

Next, the separation groove 63 configured to separate an area of the first and second spaces 64a and 64b and a part 66b of the partition, is formed by the litho-etching method.

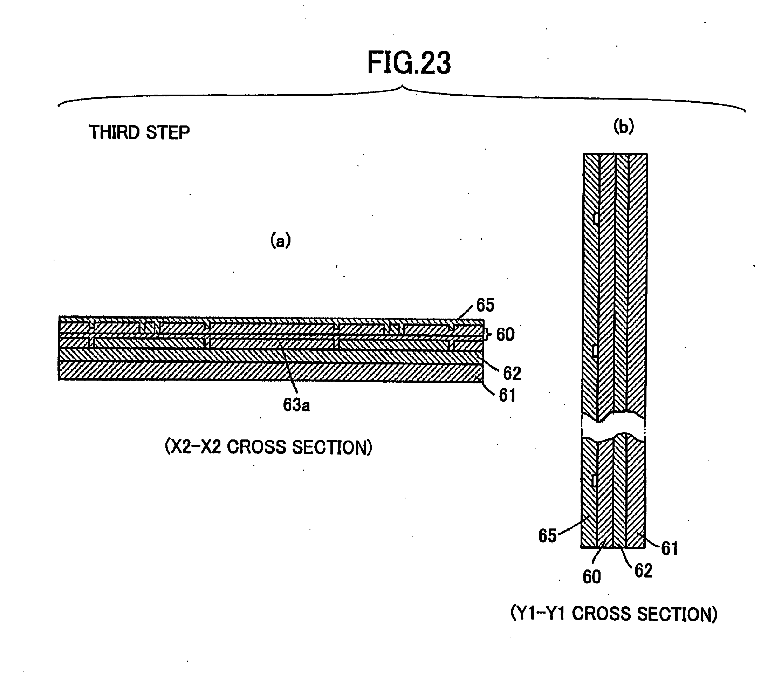

3. Third step (See FIG. 23-(a) and FIG. 23-(b))

An insulation film (CVD oxidation film) 65 is stacked so as to have a thickness of 0.15 $\mu$m. The insulation film 65 works as a mask material protecting the lower part electrode 63a in the sacrificial layer process, and as a protection

**EP 1 725 405 B1**

film preventing an electrical short circuit of the lower part electrode 63a and the upper part electrode 66.

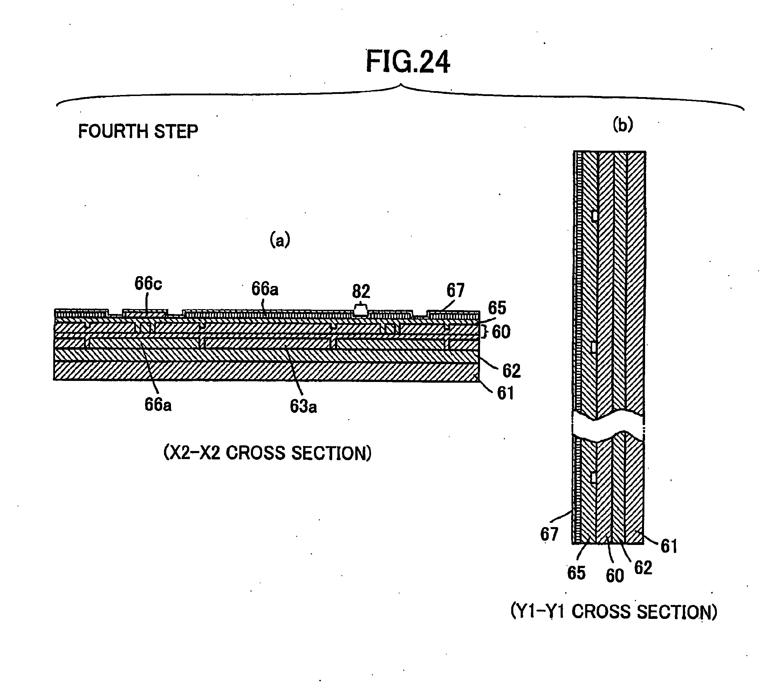

4. Fourth step (See FIG. 24-(a) and FIG. 24-(b))

P doped silicon having a thickness of 0.2 $\mu$ m is deposited and then the upper electrode 66a and a part 66c of the barrier are separately formed by the litho-etching method..At the same time, a protection hole 82 is opened larger than the sacrificial layer removing hole 71, in order to prevent the upper electrode 66a having the same material of the sacrificial layers 64a and 64b from being etched. Then, a nitride layer 67 is deposited as a vibration plate bending prevention layer by LP-CVD method so as to have a thickness of 0.2 $\mu$m.

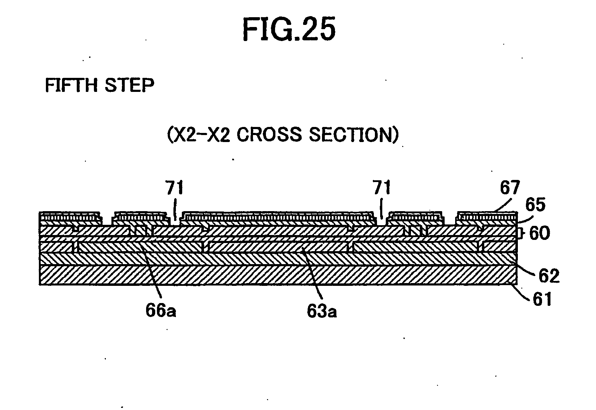

5. Fifth step (See FIG. 25)

The sacrificial layer removing hole 71 is formed by the litho-etching method and then the resist is removed.

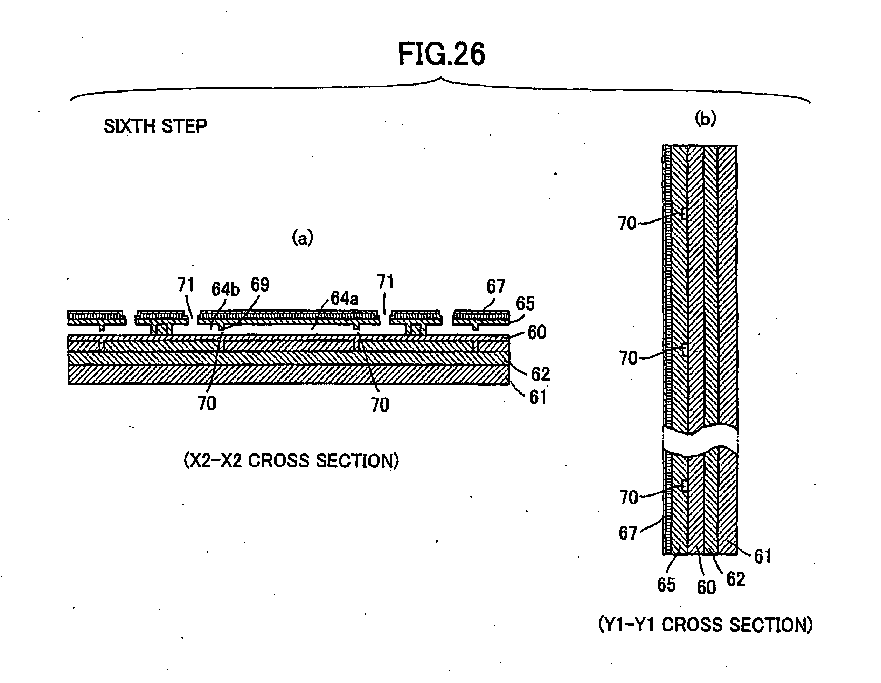

6. Sixth step (See FIG. 26)

The sacrificial layer is completely removed by a method having a high selectivity of etching rate of the sacrificial layer of the first and second spaces 64a and 64b and the insulation films 60 and 65, such as a wet etching method using alkali solution, so that the first and second spaces 64a and 64b and the connection part 70 are formed. In a case where TMAH or KOH is used as the alkali solution, it is possible to implement sacrificial layer etching having high selectivity. In addition, it is possible to implement the sacrificial layer etching by $SF_6$ plasma process or dry etching using $XeF_2$ gas.

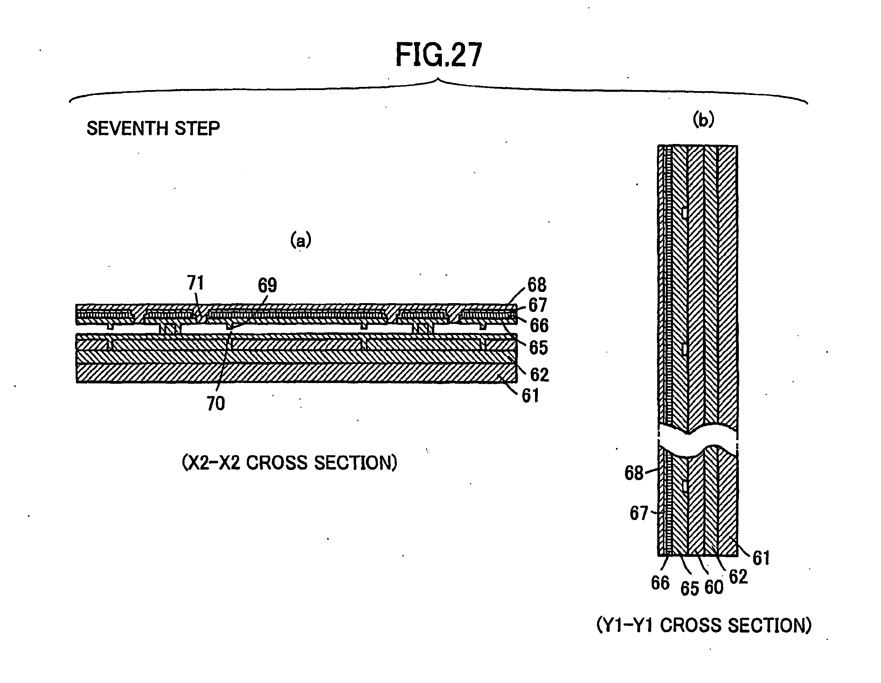

7. Seventh step (See FIG. 27)

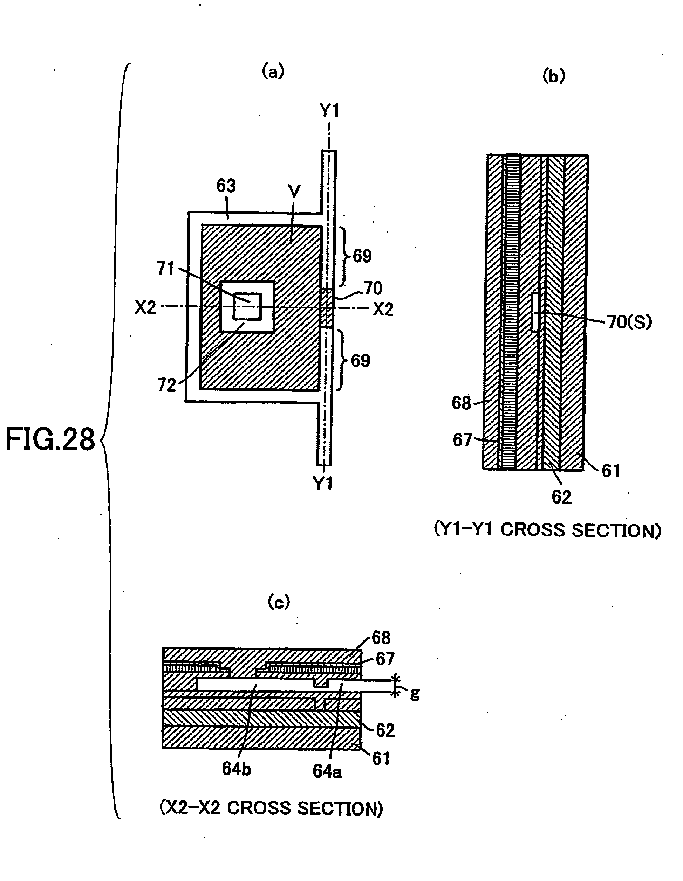

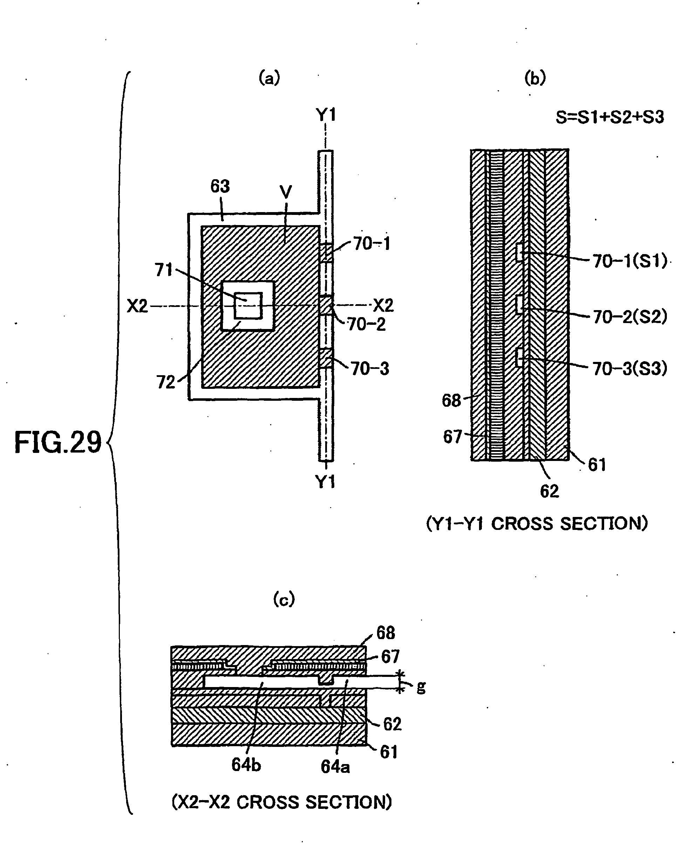

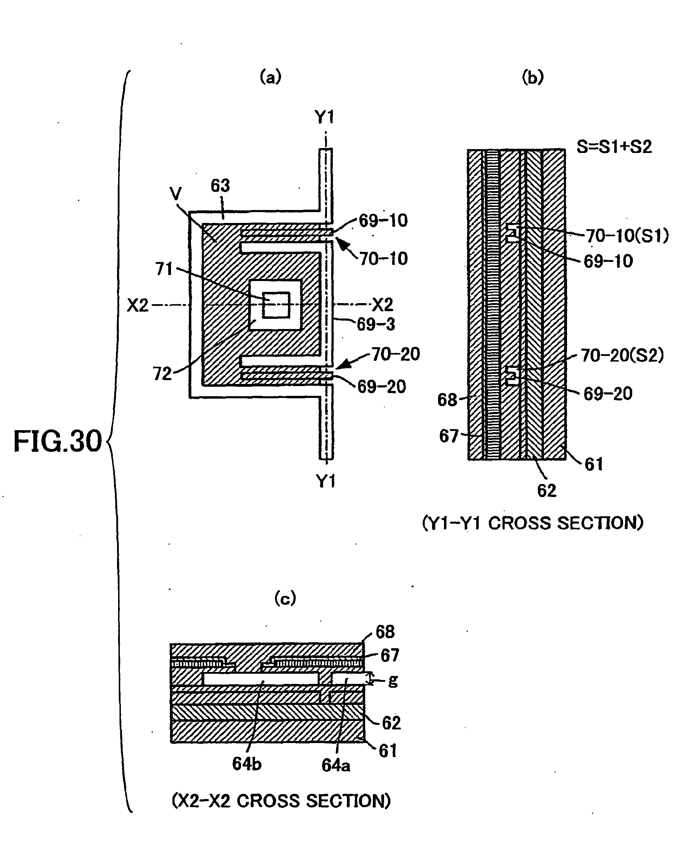

The resin film 68 having a thickness of 1.8 $\mu$m is formed as a wet film of the liquid drop by a spin coating method, considering film reduction at the time of pad forming. At this time, the sacrificial layer removing hole 71 is completely sealed by the resin film 68. Since the barrier 69 as the fluid resistance and the connection part 70 are provided, the resin film 69 is prevented from seeping from the sacrificial layer removing hole 71 into the first and second spaces 64a and 64b. After that, only an electrode wiring taking pad part (not shown) is opened by the litho-etching method. Any material can be used as the resin film, as long as it has corrosion endurance against the liquid drops such as PBO (Poly-p-phenylene-benzo-bis-oxazole) film or polyimide film, can be formed by a spin coating method, and can be completely sealed by the sacrificial layer removing hole 61.
Thus, the actuator part corresponding to the substrate 1 shown in FIG. 1 is completed. By combining this to the substrates 2 and 3 shown in FIG. 1, the liquid drop discharge head 200 is completed.
The resin film 68 seals the sacrificial layer removing hole 71 in air. Therefore, a situation where the space is vacuum sealed like a film deposited by a PVD or CVD method using the vacuum device so that the inside of the gap has a negative pressure due to atmospheric exposure, the vibration plate is bent, and desirable displacement cannot be obtained, can be prevented.
In the first example (FIG. 2 through FIG. 16), in a case where the numerical formula 2 is not satisfied due to the change of the height of the space 24a or the process, it is necessary to change (mask-revise) a measurement of "c" shown in Fig. 11-(a), for example, so that a cross-sectional area of the connection part 30 satisfies the numerical formula 2 and thereby it is possible to prevent the resin film 28 from seeping into the sacrificial layer removing hole 31. This may cause a complex procedure and increasing of the cost. On the other hand, in the second embodiment, a cross-sectional area of the connection part 70 of the first and second spaces 64a and 64b are made proper only by etching the part 70a functioning as a connection part in FIG. 22-(a) so that the part 70a has a desirable height. Hence, it is possible to achieve a desirable effect only by process control without undertaking a complex procedure and cost.
In the second embodiment, the height of the connection part is.different from the first example. Examples of the barrier 69 and the connection part are shown in FIG. 28 through FIG. 30. In an example shown in FIG. 28, a single connection part 70 is provided and measurement in a height direction (right and left directions in FIG. 28-(b)) of the connection part 70 is made smaller than the first example shown in FIG. 11.
In an example shown in FIG. 29, three connection parts 70-1, 70-2 and 70-3 are provide corresponding to a single sacrificial layer removing hole 71 and measurements in a height direction (right and left directions in FIG. 29-(b)) of the connection parts 70-1, 70-2 and 70-3 are made smaller than the first example shown in FIG. 11.
In an example shown in FIG. 30, a modified example of the example shown in FIG. 16, a barrier 69-3 having a configuration of a rectangle not having one side is arranged at a fluid path from the sacrificial layer removing hole 71 through the connection part, so that the fluid path is made to detour so that the fluid resistance is increased and two connection parts 70-10 and 70-20 are formed. Convex parts 69-10 and 69-20 are formed in the connection parts 70-10 and 70-20 so that cross-sectional views of the connection parts 70-10 and 70-20 have concave configurations as shown

**11**

in FIG. 30-(b) and a lot of changing parts of configuration measurement are provided so that the fluid resistance can be fine-adjusted.

In these examples, the volume V and cross section'S in the numerical formula 2 are calculated following the first example. As shown in FIG. 28 through FIG. 30, size and cross-sectional configurations of the connection part are made the same as the configuration of the barrier 69 wherein the sacrificial layer can be removed and the fluid resistance is increased (for example, at least both V and S satisfy the numerical formula 2). Especially, as shown in FIG. 30, in a structure where the barrier 69-3 having the configuration of a rectangle not having one side is arranged at the fluid path so that the fluid path is complex and the convex parts 69-10 and 69-20, the fluid resistance is increased and therefore a better effect of prevention of seeping of the resin film into the sacrificial layer removing hole 71 can be achieved than the examples shown in FIG. 28 and FIG. 29.

In the examples shown in FIG. 29 and FIG. 30, two or more connection parts connected the first space 64a and the second space 64b are provided (See claim 4). Under this structure, as well as the first example, it is possible to improve the removing efficiency of the sacrificial layer of the vibration plate area.

[Third example]

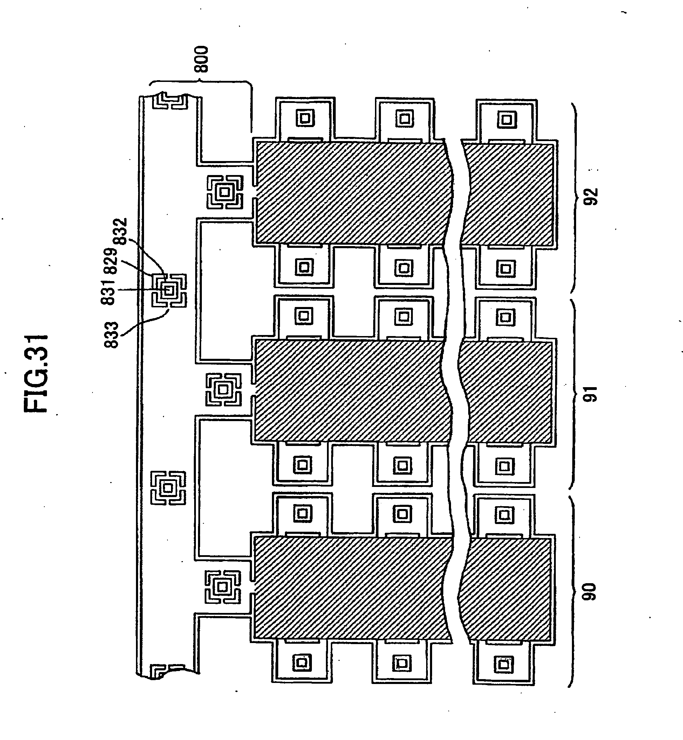

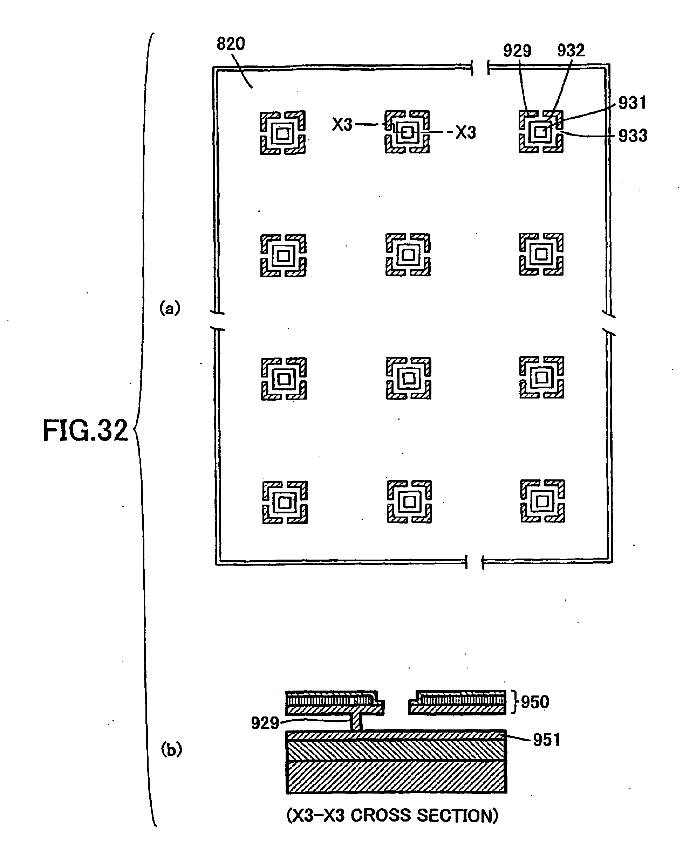

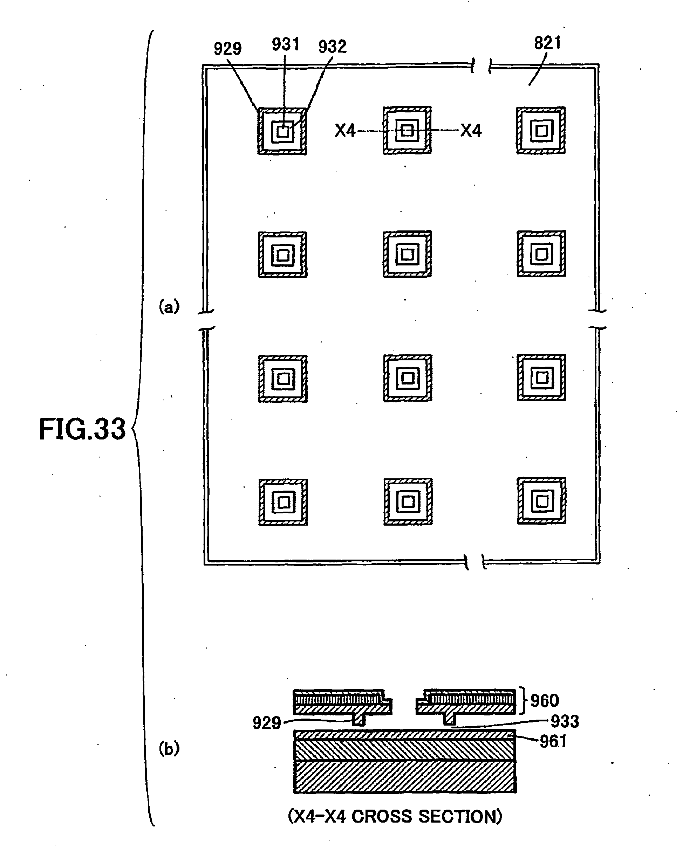

The third example is discussed with reference to FIG. 31 and FIG. 32. FIG. 31 shows a part of the liquid drop discharge head 200 wherein a connection tube (substrate) 800 having the first space 24a or 74a of the actuators 90, 91 and 92 formed by the manufacturing method of the actuator in the first and second examples and the first spaces are connected. A buffer room 820 shown in FIG. 32 or a buffer room 821 shown in FIG. 33 is connected to an extended part from the connection tube 800 shown in FIG. 31.

FIG. 32-(a) is a plan view of the buffer room 820 and FIG. 32-(b) is a cross-sectional view of a barrier part in the buffer room. FIG. 33-(a) is a plan view of the buffer room 821 and FIG. 33-(b) is a cross-sectional view of a barrier part in the buffer room.

It is normal that an actuator part (space part) of the liquid drop discharge head including the actuators 90 through 92 shown in FIG. 31 is insulated from the outside in order to prevent degradation of the property due to the entering of moisture and foreign bodies from the outside. However, the pressure in the actuator space that gives an influence to the liquid drop discharge property is sensitive to the change of the external environment and may be influenced by the change of the temperature or the pressure.

In order to prevent this, the actuators 90 through 92 are connected to the connection tube 800 shown in FIG. 31 and a part of the connection tube 800 is further connected to the buffer rooms 820 and 821 having a volume much larger than a space volume of the actuator which can absorb the change of the pressure shown in FIG. 32.

The connection tube 800 and the space parts such as the buffer rooms 820 and 821 are formed by a sacrificial layer process the same as the process used for forming the first space corresponding to the vibration plate in the first and second examples. Therefore, the sacrificial layer removing holes 831 (See FIG. 31) and 931 (See FIG. 32 and FIG. 33) and the upper part electrode protection holes 832 (See FIG. 31) and 932 (See FIG. 32 and FIG. 33) are arranged in the connection tube 800 and the buffer rooms 820 and 821, as well as the actuator. In addition, in order to prevent the resin film from seeping into the sacrificial layer removing holes 831 and 931, the burrier 829 (See FIG. 31) and 929 (See FIG. 32 and FIG. 33) and the connection openings 833 (See FIG. 31) and 933 (FIG. 32) are arranged.

Vibration areas of the buffer rooms 820 and 821 larger than the vibration plate areas of the actuators 90, 91, and 92 shown in FIG. 31 are formed simultaneously with the sacrificial layer removing process of the actuator part. Therefore, the sacrificial layer removing holes 931 are formed on the buffer rooms 820 and 821 with a equal interval and two-dimensionally. The connection tube 800 shown in FIG. 31 and the buffer rooms 820 and 821 shown in FIG. 32 and FIG. 33 are formed by a manufacturing method similar with the manufacturing method of the first example.

In FIG. 32, by proving plural connection openings 933 for a single sacrificial layer removing hole 931, it is possible to remove the connection tube 800 and the sacrificial layer in the buffer room 820 more efficiently than a case where a single connection opening is provided.

In this example, for the sacrificial layer removing holes 831 and 931, each of the connection openings 833 and 933 are provided on four sides of the burrier 829 and 929. However, the present invention is not limited to this. There is no limitation about the number and arrangement of the connection openings 831 and 931 as long as the resin film does not seep in and the sacrificial layer of the connection tube 800 and the buffer room 820 can be efficiently removed.

The buffer room 820 shown in FIG. 32 has a structural film 950 having a structure the same as the vibration plate of the actuator. However, since this structural film 950 is fixed to the base layer 951 by the barrier 929, it is not possible to bend the structural film 950 of the buffer room 820 and to change the volume of the buffer room 820.

On the other hand, the buffer room 821 shown in FIG. 33 is formed by the manufacturing method of the second example. A structural film 960 is separated from a base layer 961 by a connection part 939. Hence, it is possible to bend the structural film 960 of the buffer room 821 and to change the volume of the buffer room 821. Therefore, a pressure change of the first space of the actuator 90, 91 and 92 due to drastic atmospheric change can be absorbed by bending the structural film 960 of the buffer room 821 and it is possible to follow the atmospheric change as compared with the buffer room 820 and secure a more stable liquid drop discharge property.

Here, it is necessary to only provide space inside of the connection tube 800 and connect the connection tube 800 to the first space of the actuators 90, 91 and 92. Therefore, the connection tube 800 is formed by a sacrificial layer process using the sacrificial layer removing hole and an electrode is not provided. The barrier 829 functioning as the fluid resistance is provided between the space forming the connection part and the sacrificial layer removing hole 831 as discussed in the first example, and thereby the substrate is manufactured by a method the same as the method in the first example in a state where the space is prevented from being closed in a sealing process of the sacrificial layer removing hole (See claim 12). Thus, the substrate having a simple space can be easily manufactured with high precision.

The actuators 90, 91 and 92 connected to the buffer room 820 or 821 via the connection tube 800 can be manufactured by the method discussed in the first or second example. The buffer rooms 800 and 821 which have large areas and prevent a vibration property dispersion due to the atmospheric change of the actuators 90, 91 and 92 and connection tube 800 can be efficiently formed by a sacrificial layer process. Furthermore, by making a part and a cross section of the connection part proper, it is possible to efficiently remove the sacrificial layer of the buffer room and the connection part by a process the same as the process for removing a sacrificial layer of the vibration plate area and to reduce the number of the processes. Thus, it is possible to obtain an actuator and liquid drop discharge head having a high function, high quality, and less dispersion of the property, at a low cost.

[Fourth example]

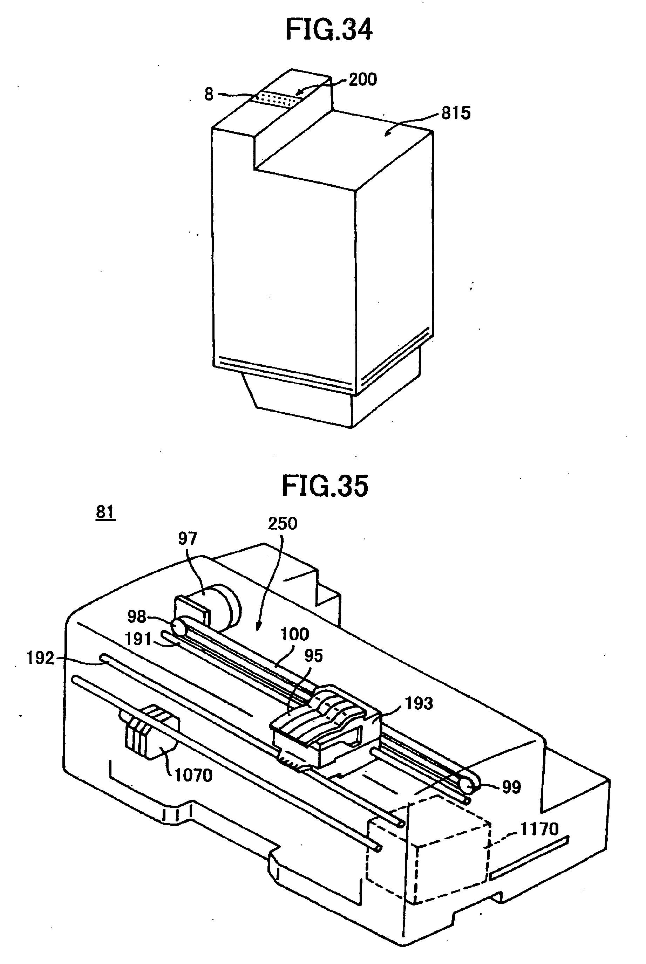

Next, an ink cartridge of the present invention is discussed with reference to FIG. 34. This ink cartridge is formed by unifying the liquid drop discharge head having the nozzle 8 and others and discussed in the first through third example and the ink tank 815 supplying the ink to the liquid drop discharge head 200 (See claim 6).

Thus, in the case of an ink tank unifying type liquid drop discharge head, low cost and reliability of the head leads to low cost and reliability of the entire ink cartridge. Hence, it is possible to improve the yield rate and reliability of the ink cartridge by reducing cost and the amount of bad manufacturing, and thereby it is possible to reduce the cost for the head unifying type ink cartridge.

[Fifth example]

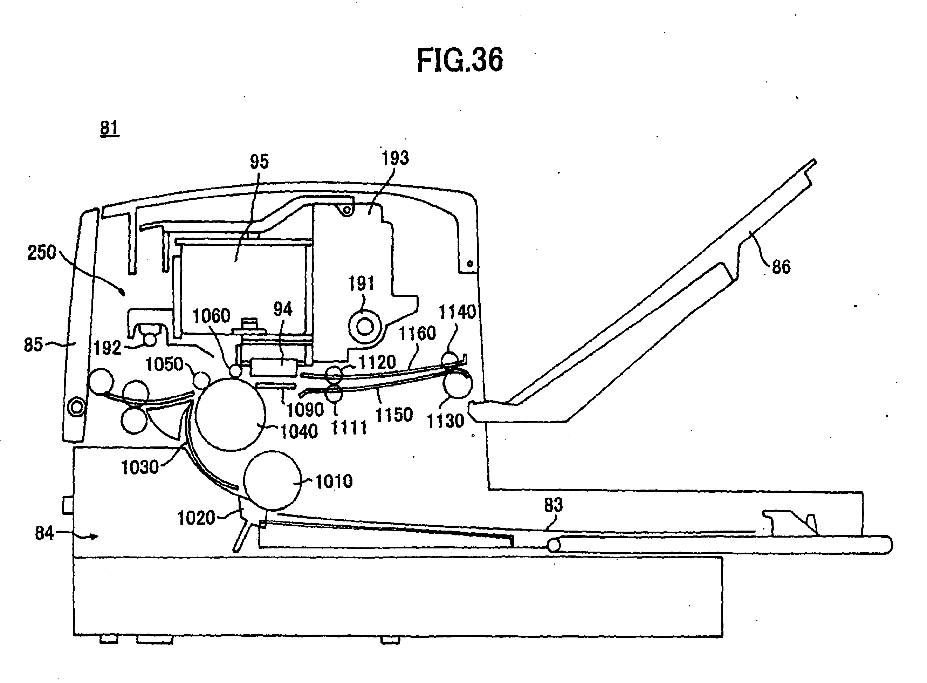

Next, an example of an ink jet recording apparatus in which the ink jet head of the present invention is used is discussed with reference to FIG. 35 and FIG. 36. FIG. 35 is a perspective view of the ink jet recording device in which the ink jet head of the present invention is provided. FIG. 36 is a cross-sectional view of a mechanism part of the ink jet recording device in which the ink jet head of the present invention is provided. The ink jet recording device includes a recording device body part 81 and a printing mechanism part 250. The printing mechanism part 250 is housed in the recording apparatus body part 81. A carriage movable inside of the recording device body part 81 in the main scanning direction, a recording head including the ink jet head of the present invention mounted on the carriage, an ink cartridge for supplying the ink to the recording head, and others are housed in the printing mechanism part 250.

A paper supply cassette 84 (or a paper supply tray) capable of loading a lot of paper 83 from a front side can be detachably connected at a lower part of the recording device body part 81. In addition, a manual paper supply tray 85 for supplying the paper 83 manually can be opened at the lower part of the recording device body part 81.

The paper 83 is taken from the paper supply cassette 84 or the manual paper supply tray 115 in the printing mechanism part 250. A picture is recorded by the printing mechanism part 250 and then discharged to a paper discharge tray 86 connected to a back surface side of the recording device body part 81.

In the printing mechanism part 250, a carriage 193 is slideably held in a main scanning direction namely a direction perpendicular to the paper of FIG. 25 by a guide member. The guide member is connected to left and right side boards not shown in FIG. 35. The guide member includes a main guide rod 191 and a sub guide rod 192. In the carriage 193, a recording head 94 is arranged in'a direction where plural ink discharging opening parts (nozzles) cross in the main scanning direction. Ink drops having colors of yellow (Y), cyan (C), magenta (M), and black (Bk), for example, are discharged by the ink jet head. The recording head 94 is mounted in a state where the direction of the ink jet faces downward. In the carriage 193, respective ink cartridges 95 supplying ink having the respective colors to the recording head 94 are detachably connected.

An air opening connected to the atmosphere is provided at an upper part of the ink cartridge 95. A supply opening part supplying the ink to the ink jet head is provided at a lower part of the ink cartridge 95. The ink is supplied to the ink jet head by a capillary of a porous body maintaining a slightly negative pressure. Although the heads 94 for the respective colors are used as the recording head in this embodiment, a single head having a nozzle jetting the respective colors may be used.

The back side, namely the lower side in the paper carriage direction, of the carriage 193 is slideably clamped by the main guide rod 191. In addition, the front side, namely the upper side in the paper carriage direction, of the carriage 193 is slideably connected by the sub guide rod 192. In order to make the carriage 193 move to scan in the main scanning direction, a timing belt 100 is stretch-connected between a driving pulley 98 rotationally driven by a main scan motor 97 and a driven pulley 99. The timing belt 100 is fixed at the carriage 193 and the carriage 163 moves and returns by forward and backward rotations of the main scan motor 97.

On the other hand, in order to carry the paper 83 set at the paper supply cassette 84 to the lower side of the recording head 94, a supply paper roller 1010, a friction pad 1020, a guide member 1030, a carry roller 1040, a small roller 1050, and a head end roller 1060 are provided in the ink jet recording device separately. Each of the sheets of paper 83 is carried from the supply paper cassette 84. The paper 83 is guided by the guide member 1030. The paper 83 is carried by being turned over by the carry roller 1040. The small roller 1050 is pushed on a circumferential surface of the carry roller 1040. A pushing angle on the paper 83 by the carry roller 1040 is determined by the head end roller 1060. The carry roller 1040 is rotationally driven by a sub scan motor 1070 via a gear line.

The paper 83 pushed by the carry roller 1040 corresponding to a moving area in the main scanning direction of the carriage 193 is received by a print receiving member 1090 as a paper guide member guiding in a lower direction of the recording head 94. A carry roller 1111 rotationally driven to carry the paper 83 in a discharge paper direction and a spur 1120, a discharge paper roller 1130 for carrying the paper 83 to the paper discharge tray 86, a spur 1140, and guide members 1150 and 1160 forming a paper discharge path are provided at the lower side of the paper carrying direction of the print receiving member 1090.

At the time of recording, the recording head 94 is driven based on a picture signal while the carriage 193 is moved. The ink is discharged onto the paper 83 which does not move so that one line is recorded on the paper 83. After that, the paper 83 is moved a designated distance and the next line is recorded. The recording operation is finished by receiving a record finishing signal or a signal indicating that the rear end part of the paper 83 has arrived at the recording area, so that the paper'83 is discharged.

A recovery apparatus 1170 for recovering from bad discharging of the recording head 94 is arranged at an outside position of the recording area, namely the right end side of the moving direction of the carriage 93. The recovery apparatus 1170 includes capping means, absorption means, and cleaning means. During waiting for ready for printing, the carriage 193 is moved to the side of the recovery apparatus 1170. The recording head 94 is capped by the capping means. The bad discharging based on an ink dry condition can be prevented by maintaining the jet opening part in a wet state. In addition, the ink not used for recording is discharged during recording, so that ink viscosities of all of the discharging opening parts are kept constant, and thereby a stable jetting ability can be maintained.

In a case where a bad discharging occurs, the discharging opening part such as the nozzle of the head 94 is sealed by the capping means. The bubble with the ink is absorbed from the discharging opening part through a tube by the absorption means. The ink, the dust or the like that adheres to the discharging opening surface is removed by the cleaning means so that bad discharging is recovered from. In addition, the ink that is absorbed is discharged to a waste ink saver (not shown) arranged at a lower part of the body, so that the ink is absorbed and maintained by an ink absorption body inside of the waste ink saver (See claim 7).

Thus, since the ink jet head using the liquid drop discharging head 200 of the above-discussed first through third examples is mounted on this ink jet recording device, it is possible to prevent an ink drop from bad discharging due to bad driving of the vibration means and therefore a stable ink drop discharging property is obtained so that an image quality is improved. In addition, since the recording head driven at a low voltage is mounted, it is possible to reduce the consumption of electric power of the whole of the ink jet recording device.

Although the present invention is applied to the ink jet head as a liquid drop jet head in the above embodiments, the present invention may be applied to a liquid drop jet head other than the ink jet head such as a liquid drop jet head configured to discharge a liquid resist for patterning.

The present invention is used for the liquid drop discharge head and the vibration plate is displaced by the electrostatic force acting between the electrodes. Hence, it is possible to realize a device having a small size and electrodes having low consumption of electric power. The present invention is not limited to the above-discussed embodiments, but variations and modifications may be made without departing from the scope of the present invention.

**Claims**

1.  A liquid drop discharge head, comprising:

    a discharging room (6) which discharges a liquid drop and is connected to a nozzle (8);
    a common liquid room (10) receiving discharge fluid supplied to the discharging room;
    a pressure generating part configured to give discharging energy to the discharge fluid in the discharging room and thereby the discharge fluid can be discharged from the nozzle, the pressure generating part comprising:

a vibration plate (5) facing an electrode (4, 23a) via a first space (7, 24a) in a vibration plate area (34a) and arranged to be displaced by an electrostatic force;

a plurality of sacrificial layer removing areas each including a second space (24b) formed outside the vibration area and a sacrificial layer removing hole formed in the vibration plate (31) from which a sacrificial layer has been removed to form the first space, each of the sacrificial layer removing areas being smaller than the vibration plate area (34a);

a sealing material (28) sealing the sacrificial layer removing hole (31); **characterized by**

a barrier (29) formed between each of the plurality of sacrificial layer removing areas (24b) and the vibration plate area (34a) and configured to prevent said sealing material from seeping from the sacrificial layer removing hole and sacrificial layer removing area into the first space through a connection part (30) formed in the barrier for connecting the first and respective second spaces.

2. A liquid drop discharge head according to claim 1 wherein a plurality of said connection parts (30-1 to 30-3) are provided in the barrier.

3. A liquid drop discharge head according to claim 1, wherein said vibration plate area (34a) has a rectangular shape and said plurality of sacrificial layer removing areas are formed on both longitudinal sides of the vibration plate area (34a) with a predetermined interval between the sacrificial layer removing holes along the longitudinal sides of the vibration plate area.

4. An ink cartridge, comprising:

a liquid drop discharge head configured to discharge an ink drop; and
a ink tank configured to supply ink to the liquid drop discharge head;
wherein the liquid drop discharge head is according to claim 1, 2 or 3.

5. An ink jet recording device, comprising:

a liquid drop discharge head configured to discharge ink drop;
wherein the liquid drop discharge head is according to claim 1, 2 or 3.

**Patentansprüche**

1. Flüssigkeitstropfen-Abgabekopf, der umfasst:

einen Abgaberaum (6), um einen Flüssigkeitstropfen abzugeben, der mit einer Düse (8) verbunden ist;
einen gemeinsamen Flüssigkeitsraum (10), um Abgabefluid, das dem Abgaberaum zugeführt wird, aufzunehmen;
einen Druckerzeugungsabschnitt, der konfiguriert ist, um an das Abgabefluid in dem Abgaberaum Energie abzugeben, wodurch das Abgabefluid von der Düse abgegeben werden kann, wobei der Druckerzeugungsabschnitt umfasst:

eine Vibrationsplatte (5), die einer Elektrode (4, 23a) über einen ersten Raum (7, 24a) in einem Vibrationsplattenbereich (34a) zugewandt ist und dazu ausgelegt ist, durch eine elektrostatische Kraft verlagert zu werden;
mehrere Opferschicht-Entfernungsbereiche, wovon jeder einen zweiten Raum (24b), der außerhalb des Vibrationsbereichs ausgebildet ist, und ein Opferschicht-Entfernungsloch (31), das in der Vibrationsplatte ausgebildet ist und von dem eine Opferschicht entfernt worden ist, um den ersten Raum zu bilden, aufweist, wobei jeder der Opferschicht-Entfernungsbereiche kleiner ist als der Vibrationsplattenbereich (34a); und
ein Dichtungsmaterial (28), das das Opferschicht-Entfernungsloch (31) abdichtet;
**gekennzeichnet durch**
eine Sperre (29), die zwischen jedem der mehreren Opferschicht-Entfernungsbereiche (24b) und dem Vibrationsplattenbereich (34a) ausgebildet ist und konfiguriert ist, um zu verhindern, dass Dichtungsmaterial von dem Opferschicht-Entfernungsloch und von dem Opferschicht-Entfernungsbereich **durch** einen in der Sperre gebildeten Verbindungsabschnitt (30) zum Verbinden des ersten und des zweiten Raums in den ersten Raum einsickert.

**2.** Flüssigkeitstropfen-Abgabekopf nach Anspruch 1, wobei in der Sperre mehrere der Verbindungsabschnitte (30-1 bis 30-3) vorgesehen sind.

**3.** Flüssigkeitstropfen-Abgabekopf nach Anspruch 1, wobei der Vibrationsplattenbereich (34a) eine rechtwinklige Form hat und die mehreren Opferschicht-Entfernungsbereiche an beiden longitudinalen Seiten des Vibrationsplattenbereichs (34a) ausgebildet sind, wobei zwischen den Opferschicht-Entfernungslöchern längs der longitudinalen Seiten des Vibrationsplattenbereichs ein vorgegebener Zwischenraum vorhanden ist.

**4.** Tintenpatrone, die umfasst:

einen Flüssigkeitstropfen-Abgabekopf, der konfiguriert ist, um einen Tintentropfen abzugeben; und
einen Tintentank, der konfiguriert ist, um dem Flüssigkeitstropfen-Abgabekopf Tinte zuzuführen;
wobei der Flüssigkeitstropfen-Abgabekopf wie in Anspruch 1, 2 oder 3 definiert beschaffen ist.

**5.** Tintenstrahlaufzeichnungsvorrichtung, die umfasst:

einen Flüssigkeitstropfen-Abgabekopf, der konfiguriert ist, um Tintentropfen auszustoßen;
wobei der Flüssigkeitstropfen-Abgabekopf wie in Anspruch 1, 2 oder 3 definiert beschaffen ist.

**Revendications**

**1.** Tête de décharge de goutte de liquide, comprenant :

une chambre de décharge (6) qui décharge une goutte de liquide et est raccordée à une buse (8) ;
une chambre de liquide commune (10) recevant le fluide de décharge alimenté à la chambre de décharge ;
une partie de génération de pression configurée pour donner l'énergie de décharge au fluide de décharge dans la chambre de décharge et ainsi le fluide de décharge peut être déchargé par la buse, la partie de génération de pression comprenant :

une plaque vibrante (5) faisant face à une électrode (4, 23a) via un premier espace (7, 24a) dans une zone de plaque vibrante (34a) et agencée pour être déplacée par une force électrostatique ;
une pluralité de zones de retrait de couche sacrificielle, comprenant chacune un deuxième espace (24b) formé à l'extérieur de la zone de vibration et un trou de retrait de couche sacrificielle (31) formé dans la plaque vibrante à partir duquel une couche sacrificielle peut être retirée du premier espace, chacune des zones de retrait de couche sacrificielle étant plus petite que la zone de plaque vibrante (34a) ;
un matériau d'étanchéité (28) réalisant l'étanchéité du trou de retrait de couche sacrificielle (31) ; **caractérisée par** :

une barrière (29) formée entré chacune de la pluralité de zones de retrait de couche sacrificielle (24b) et la zone de plaque vibrante (34a) et configurée pour empêcher ledit matériau d'étanchéité de s'infiltrer du trou de retrait de couche sacrificielle et de la zone de retrait de couche sacrificielle dans le premier espace, par une partie de raccordement (30) formée dans la barrière, pour raccorder les premier et deuxième espaces respectifs.

**2.** Tête de décharge de goutte de liquide selon la revendication 1, dans laquelle une pluralité desdites parties de raccordement (30-1 à 30-3) est prévue dans la barrière.

**3.** Tête de décharge de goutte de liquide selon la revendication 1, dans laquelle ladite zone de plaque vibrante (34a) a une forme rectangulaire et ladite pluralité de zones de retrait de couche sacrificielle est formée sur les deux côtés longitudinaux de la zone de plaque vibrante (34a) avec un intervalle prédéterminé entre les trous de retrait de couche sacrificielle le long des côtés longitudinaux de la zone de plaque vibrante.

**4.** Cartouche d'encre comprenant :

une tête de décharge de goutte de liquide configurée pour décharger une goutte d'encre ; et
un réservoir d'encre configuré pour alimenter de l'encre à la tête de décharge de goutte de liquide ;
dans laquelle la tête de décharge de goutte de liquide est selon la revendication 1, 2 ou 3.

5. Dispositif d'enregistrement à jet d'encre comprenant :

une tête de décharge de goutte de liquide configurée pour décharger la goutte d'encre ;
dans lequel la tête de décharge de goutte de liquide est selon la revendication 1, 2 ou 3.

# FIG.1

# FIG.2

# FIG.3

(Y1-Y1 CROSS SECTION)

30

28
27
26 25 22
21

FIG.4

(a)
(X1-X1 CROSS SECTION)

(b)
(X2-X2 CROSS SECTION)

(c)
(X3-X3 CROSS SECTION)

EP 1 725 405 B1

# FIG.5

(a)

36a  23a  36a  40

22  21

(b)

22

40  21

EP 1 725 405 B1

# FIG.6

(b)

(a)

EP 1 725 405 B1

# FIG.7

(a)

(b)

EP 1 725 405 B1

# FIG.8

(b)

(a)

EP 1 725 405 B1

# FIG.9

(a)

(b)

EP 1 725 405 B1

# FIG.10

(a)

(b)

EP 1 725 405 B1

FIG.11

(a)

Y1

33

a

31

X2 —·—·—·—·—·— X2

b

29

c

29

30

32

Y1

(b)

21

28

30(S)

27

25   33   22

(c)

28

27

26

40

22

33

g

33

24b   21

# FIG.12

**(a)**

Y1

33  V

31

X2 --- X2

32

30-1

30-2

Y1

**(c)**

30-1(S1)

21

28

30-2(S2)

S=S1+S2

27

25  33  22

**(b)**

28

27

26

40

22

21  24b  24a

33

g

33

## FIG.13

(a)

33
V
31
X2
32

Y1
30-1
X2
30-2
30-3
Y1

(c)

30-1(S1)
30-2(S2)
21
28
30-3(S3)
27

S=S1+S2+S3

25  33  22

(b)

28
27
26
40
22

33
g
33

21

FIG.14

(a)

33  V

29-1

X2 ——————————————— X2

32

31

Y1

Y1

(c)

30(S)

28

27

25  33  22

21

(b)

28

27

26

40

22

21

33

g

33

(a)

(c)

Y1

33  29-2a

30

29-2b

X2 ——————— X2

32

29-2c

V

31

FIG.15

30(S)

28

27

21

25  33  22

(b)

28

27

26

40

22

21

33

g

33

## FIG.16

(a)

Y1

33

V

31

X2 —·— X2

32

30-1

29-3

30-2

Y1

(c)

30-1(S1)

21

28

30-2(S2)

27

S=S1+S2

25    33    22

(b)

28    32

27
26
33

40
22
33

21    24b    24a

g

# FIG.17

(a)

(b)

EP 1 725 405 B1

# FIG.18

(X1-X1 CROSS SECTION)

68
67
66
65
} 64

60

64a    63a

62
61

# FIG.19

(X2-X2 CROSS SECTION)

68
67
66
65
} 64

60

64b    64a    63a    69

62
61

# FIG.20

(X3-X3 CROSS SECTION)

68
67
66
65
} 64

60

64b    69    64a    63a    69

62
61

# FIG.21

FIRST STEP

(a)

66a    63a    60

62
61

(X2–X2 CROSS SECTION)

(b)

60    61
62

(Y1–Y1 CROSS SECTION)

EP 1 725 405 B1

# FIG.22

SECOND STEP

(b)

(a)

63  70a  64a  64b  66b

60

62
61

(X2–X2 CROSS SECTION)

60    61
62

(Y1–Y1 CROSS SECTION)

EP 1 725 405 B1

# FIG.23

EP 1 725 405 B1

THIRD STEP

(b)

(a)

65
60
62
61

63a

(X2–X2 CROSS SECTION)

65
61
60
62

(Y1–Y1 CROSS SECTION)

# FIG.24

FOURTH STEP

(b)

(a)

66c     66a     82     67

65

60

62

61

66a     63a

(X2–X2 CROSS SECTION)

67

65    60    62

61

(Y1–Y1 CROSS SECTION)

EP 1 725 405 B1

# FIG.25

FIFTH STEP

## (X2–X2 CROSS SECTION)

# FIG.26

SIXTH STEP

(b)

(a)

71  64b  69      64a    71        67
                                    65
                                    60
                                    62
                                    61
70              70

(X2-X2 CROSS SECTION)

70

70

70

67

65  60  62  61

(Y1-Y1 CROSS SECTION)

EP 1 725 405 B1

# FIG.27

SEVENTH STEP

(a)

(X2-X2 CROSS SECTION)

(b)

(Y1-Y1 CROSS SECTION)

EP 1 725 405 B1

# FIG.28

(a)

(b)

(Y1–Y1 CROSS SECTION)

(c)

(X2–X2 CROSS SECTION)

**FIG.29**

(a)

63  V  Y1

71

X2 ──────── X2

72

70-1

70-2

70-3

Y1

(b)

S=S1+S2+S3

70-1(S1)

70-2(S2)

70-3(S3)

68

67

62

61

(Y1-Y1 CROSS SECTION)

(c)

68
67
g
62
61

64b    64a

(X2-X2 CROSS SECTION)

EP 1 725 405 B1

(a)

63
V
69-10
70-10
71
X2
X2
69-3
72
70-20
69-20

Y1

Y1

(b)

S=S1+S2

70-10(S1)
69-10

70-20(S2)
69-20

68
67
61
62

(Y1-Y1 CROSS SECTION)

FIG.30

(c)

68
67
g

62
61

64b
64a

(X2-X2 CROSS SECTION)

45

# FIG.31

833 831 829 832

800

90    91    92

EP 1 725 405 B1

FIG.32

(a)

820            929    932

931

933

X3 —     —X3

(b)

929

}950

951

(X3–X3 CROSS SECTION)

FIG.33

(a)

929　931　932　　　　　　　　821

X4 --- X4

(b)

960
929
933
961

(X4−X4 CROSS SECTION)

# FIG.34

# FIG.35

EP 1 725 405 B1

# FIG.36

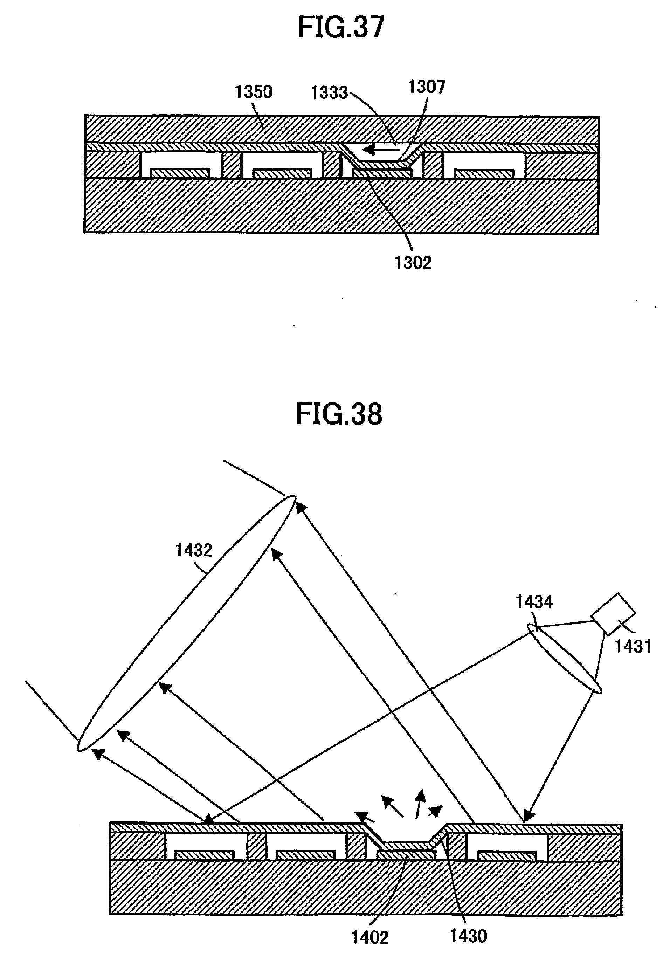

# FIG.37

1350    1333    1307

1307

1302

# FIG.38

1432

1434

1431

1402    1430

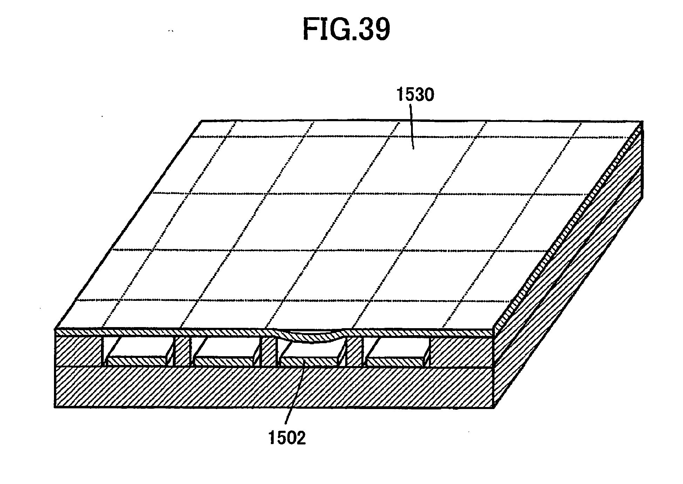

# FIG.39

1530

1502

**EP 1 725 405 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP WO9934979 B
- JP 2001018383 A
- EP 1226945 A1
- WO 0212116 A
- WO 2004012942 A1